# EUROPÄISCHE PATENTSCHRIFT

(11) **EP 3 542 052 B1**
(45) Veröffentlichungstag und Bekanntmachung des Hinweises auf die Patenterteilung: **25.08.2021**
(21) Anmeldenummer: 17788238.8
(22) Anmeldetag: 25.10.2017
(51) Int. Cl.: F03D 7/02

(54) **WINDENERGIEANLAGE UND VERFAHREN ZUM BETREIBEN EINER WINDENERGIEANLAGE**
WIND TURBINE AND METHOD FOR OPERATING A WIND TURBINE
ÉOLIENNE ET PROCÉDÉ DE FONCTIONNEMENT D'UNE ÉOLIENNE

(30) Priorität: 16.11.2016 DE 102016121978
(43) Veröffentlichungstag der Anmeldung: 25.09.2019
(73) Patentinhaber: Wobben Properties GmbH, 26607 Aurich (DE)
(72) Erfinder: MESSING, Ralf, 26605 Aurich (DE); GIENGIEL, Wojciech, 26607 Aurich (DE); SEEBERG, Sven, 26556 Westerholt (DE)
(74) Vertreter: Eisenführ Speiser
(86) Internationale Anmeldenummer: PCT/EP2017/077271
(87) Internationale Veröffentlichungsnummer: WO 2018/091241

(56) Entgegenhaltungen:
- EP-A1- 1 944 667
- EP-A2- 2 581 600
- US-A1- 2010 133 819

## Beschreibung

Die vorliegende Erfindung betrifft eine Windenergieanlage. Die vorliegende Erfindung betrifft auch ein Verfahren zum Parametrieren einer Windenergieanlage und die vorliegende Erfindung betrifft ein Verfahren zum Betreiben einer Windenergieanlage.

Windenergieanlagen sind bekannt, sie erzeugen elektrische Leistung aus Wind, insbesondere um sie in ein elektrisches Versorgungsnetz einzuspeisen. Neben den Vorzügen der umweltfreundlichen Energieerzeugung kann eine Windenergieanlage in bestimmten Situationen auch als störend empfunden werden. Besonders wenn Windenergieanlagen in der Nähe von besiedeltem Gebiet betrieben werden, können Betriebsgeräusche der Windenergieanlage als störend empfunden werden.

Besonders Windgeräusche an den Rotorblättern der Windenergieanlage können zu einem mehr oder weniger lauten Geräuschspektrum führen. Um ein solches Geräuschspektrum zu verringern und damit die Windenergieanlage leiser zu machen, kann in bestimmten Situationen vorgeschlagen werden, die Drehzahl der Windenergieanlage zu reduzieren.

Es können aber auch andere Schallquellen vorhanden sein. Es kann nämlich auch Schall durch Schwingungen in den Türmen oder Maschinenhäusern von Windenergieanlagen entstehen, insbesondere bei angeregten Resonanzen. Ein solcher Schall bzw. dadurch entstandener Schall kann auch als Körperschall bezeichnet werden. Erhöhte Schallleistungspegel durch diesen Körperschall treten oftmals in engen Frequenzbändern auf, sind oftmals niederfrequent und werden vom menschlichen Ohr als unangenehm empfunden. In Frequenzspektren tritt dieser Körperschall emittierte Lärm im jeweiligen Frequenzband als Peak auf.

Auch ein solcher Körperschall, besonders der genannte Peak im Frequenzspektrum, kann im Betrieb durch Drosseln der Windenergieanlage reduziert werden. Es kann aber auch der Effekt auftreten, dass ein gedrosselter Betrieb der Windenergieanlage das Gesamtspektrum verringert und den Peak des Körperschalls dadurch dominanter werden lässt. Dadurch kann sogar der Effekt auftreten, dass ein solcher Körperschall vom menschlichen Ohr dadurch noch stärker und damit als noch unangenehmer wahrgenommen wird.

Ein solcher Körperschall mit einem ausgeprägten Peak im Frequenzspektrum wird auch als Tonhaltigkeit bezeichnet.

Es sind auch Verfahren bekannt, die bekannte Anlagenresonanzen in ihrem Betrieb aussparen. Dazu wird besonders eine Drehzahlregelung vorgesehen, die entsprechende Rotordrehzahlen auslässt bzw. ggf. so schnell wie möglich durchsteuert, die eine Anlagenresonanz anregen. Problematisch bei solchen Verfahren ist besonders, dass eine Entscheidung zu treffen ist, ob die Anlage mit niedrigerer oder höherer Drehzahl als der auszusparende Drehzahlbereich betrieben werden soll. Liegt ein ansonsten wünschenswerter Betriebspunkt im Bereich der auszusparenden Drehzahl, kann eine solche Entscheidung schwierig werden und im ungünstigsten Fall zu einem ständigen Wechsel zwischen der nächsthöheren und nächstniedrigeren Drehzahl führen.

Das Deutsche Patent- und Markenamt hat in der Prioritätsanmeldung zu vorliegender Anmeldung folgenden Stand der Technik recherchiert: US 2008/0164091 A1; US 2012/0139244 A1; WO 2012/139584 A1 und WO 2013/097863 A1.

Der vorliegenden Erfindung liegt somit die Aufgabe zu Grunde, zumindest eines der genannten Probleme zu adressieren. Insbesondere soll eine Lösung vorgeschlagen werden, die das Auftreten oder Wahrnehmen solchen Körperschalls reduziert. Zumindest soll gegenüber bisher bekannten Lösungen eine alternative Lösung vorgeschlagen werden.

Erfindungsgemäß wird eine Windenergieanlage gemäß Anspruch 1 vorgeschlagen. Diese weist einen Turm, einen aerodynamischen Rotor und einen Generator auf. Der aerodynamische Rotor, der mehrere Rotorblätter ausweist, wobei grundsätzlich auch eines reichen würde, ist mit einer veränderlichen Rotordrehzahl betreibbar und die Rotorblätter sind in ihrem Rotorblattwinkel verstellbar. Der Rotorblattwinkel wird generell auch als Pitchwinkel und das Verstellen des Rotorblattwinkels als Pitchen bezeichnet.

Zum Betreiben der Windenergieanlage ist eine Betriebskennlinie vorgegeben, die einen Zusammenhang zwischen der Rotordrehzahl und der Ausgangsleistung angibt. Besonders wird die Windenergieanlage in Abhängigkeit einer solchen Betriebskennlinie derart betrieben, dass bei sich einstellender Rotordrehzahl eine entsprechende Ausgangsleistung gemäß der Betriebskennlinie eingestellt wird. Dafür ist eine Steuerung vorgesehen, die die Ausgangsleistung entsprechend der Betriebskennlinie in Abhängigkeit der Rotordrehzahl einstellt. Es wird nun als Betriebskennlinie eine tonhaltigkeitsreduzierte Betriebskennlinie vorgesehen, die auswählbar ist. Sie wird entsprechend dann ausgewählt, wenn die Tonhaltigkeit zu reduzieren oder zu begrenzen ist.

Diese tonhaltigkeitsreduzierte Betriebskennlinie ist so ausgelegt, dass eine Anregung einer Anlagenresonanz der Windenergieanlage im Vergleich zu einer leistungsoptimalen Betriebskennlinie reduziert ist. Dabei ist die tonhaltigkeitsreduzierte Betriebskennlinie aber so ausgebildet, dass sie eine dieser anlagenresonanzanregende Drehzahl nicht ausspart. Besonders ist diese tonhaltigkeitsreduzierte Betriebskennlinie eine kontinuierliche Kennlinie.

Erfindungsgemäß wird somit vorgeschlagen, zur Reduzierung oder Begrenzung der Tonhaltigkeit eine andere, aber nicht sprunghafte Betriebskennlinie auszuwählen.

Vorzugsweise wird vorgeschlagen, dass die Betriebskennlinie auswählbar ist aus der tonhaltigkeitsreduzierten Betriebskennlinie, der leistungsoptimalen Betriebskennlinie und einer schallreduzierten Betriebskennlinie. Die leistungsoptimale Betriebskennlinie ist dabei die Betriebskennlinie, die so ausgelegt ist, dass eine Leistungsentnahme aus dem Wind maximiert wird. Diese leistungsoptimale Betriebskennlinie kann besonders dann ausgewählt werden, wenn eine Schallreduzierung grundsätzlich nicht notwendig ist, oder in der gegebenen Situation kein störender Schall zu erwarten ist. Das kann bspw. auch von der Windrichtung abhängen, wenn diese bspw. so ist, dass der Wind Schall von der Windenergieanlage nur in nicht besiedeltes Gebiet trägt.

Die schallreduzierte Betriebskennlinie ist so ausgelegt, dass Schallemissionen der Windenergieanlage gegenüber der leistungsoptimalen Betriebskennlinie generell reduziert sind. Besonders ist hier ein Schallleistungsspektrum der Schallemissionen reduziert. Dementgegen ist bei der tonhaltigkeitsreduzierten Betriebskennlinie gezielt die Tonhaltigkeit reduziert. Das kann auch bedeuten, dass das Geräuschspektrum insgesamt nicht oder nur geringfügig gegenüber der leistungsoptimalen Betriebskennlinie reduziert ist.

Durch diese Auswahl zwischen den genannten Betriebskennlinien kann sich somit die Windenergieanlage auf einfache Art und Weise auf die jeweiligen Gegebenheiten oder Anforderungen einstellen, während ein kontinuierlicher Betrieb bzw. eine kontinuierliche Betriebsführung gewährleistet ist.

Gemäß einer Ausgestaltung wird vorgeschlagen, dass die tonhaltigkeitsreduzierte Betriebskennlinie in einem Resonanzdrehzahlbereich geringere Werte der Ausgangsleistung aufweist, als die leistungsoptimale Betriebskennlinie in demselben Resonanzdrehzahlbereich, wobei die tonhaltigkeitsreduzierte Betriebskennlinie auch im Resonanzdrehzahlbereich stetig ist. Der Resonanzdrehzahlbereich ist somit ein Bereich, in dem die Rotordrehzahl liegt, die die Anlagenresonanz der Windenergieanlage anregt. Hier verläuft die tonhaltigkeitsreduzierte Betriebskennlinie zumindest etwas flacher als die leistungsoptimale Betriebskennline.

Beide Betriebskennlinien geben die Ausgangsleistung in Abhängigkeit der Rotordrehzahl an, wobei auch eine äquivalente Drehzahl verwendet werden könnte, und entsprechend ist die tonhaltigkeitsreduzierte Betriebskennlinie hier abgesenkt. Zumindest ist ein Wert der Ausgangsleistung bei der Resonanzdrehzahl der tonhaltigkeitsreduzierten Betriebskennlinie kleiner als bei der leistungsoptimalen Betriebskennlinie. Dabei ist aber die tonhaltigkeitsreduzierte Betriebskennlinie auch im Resonanzdrehzahlbereich stetig. Es wird hier also nicht ein singulärer Wert der Ausgangsleistung, sondern der Bereich insgesamt ist geringer, aber damit ist auch wenigstens ein Wert der tonhaltigkeitsreduzierten Betriebskennlinie geringer als der leistungsoptimierten Betriebskennlinie. Auch damit kann eine gezielte Berücksichtigung der Tonhaltigkeit realisiert werden, indem gezielt in dem betreffenden Drehzahlbereich die Leistung reduziert wird. Damit werden auch insgesamt bei dieser Drehzahl wirkende Kräfte reduziert und entsprechend wird auch eine Anregung der Anlagenresonanz reduziert.

Eine Windenergieanlage kann grundsätzlich auch mehrere Anlagenresonanzen aufweisen, es wird hier aber davon ausgegangen, dass eine Anlagenresonanz dominant ist und eben diese Anlagenresonanz wird durch die vorgeschlagene Maßnahme geringer angeregt. Gleichwohl kann die Windenergieanlage dabei aber mit einer stetigen Betriebskennlinie betrieben werden.

Vorzugsweise ist die tonhaltigkeitsreduzierte Betriebskennlinie auch im Resonanzdrehzahlbereich stetig differenzierbar und streng monoton steigend. Die Betriebskennlinie ist also auch nach einer Ableitung, also einer Ableitung der Ausgangsleistung nach der Rotordrehzahl, stetig. Außerdem ist sie streng monoton steigend, die Ausgangsleistung nimmt also mit Zunahme der Rotordrehzahl zu, ohne dass es einen abfallenden oder gleichbleibenden Bereich gibt. Dadurch kann die Betriebskennlinie auch für den tonhaltigkeitsreduzierten Betrieb auf einfache Art und Weise zur Steuerung der Windenergieanlage dienen. Besonders wird vermieden, dass durch waagerechte oder sogar wieder abfallende Bereiche der Betriebskennlinie für eine umzusetzende Regelung unbestimmte und/oder instabile Bereiche entstehen.

Es wird gemäß einer weiteren Ausführungsform vorgeschlagen, dass die tonhaltigkeitsreduzierte Betriebskennlinie in einen ersten, zweiten und dritten Rotordrehzahlbereich eingeteilt werden kann. Dabei beginnt der erste Rotordrehzahlbereich bei einer Startdrehzahl, die eine Rotordrehzahl bezeichnet, mit der die Windenergieanlage gestartet wird. Der zweite Rotordrehzahlbereich weist höhere Drehzahlen auf, als der erste Rotordrehzahlbereich und schließt sich somit an den ersten Rotordrehzahlbereich an. Der dritte Rotordrehzahlbereich weist noch höhere Drehzahlen auf, als der zweite Rotorbereich und reicht bis zu einer Nenndrehzahl heran. Dabei umfasst der zweite Rotordrehzahlbereich die Resonanzrotordrehzahl. Diese drei Rotordrehzahlbereiche und damit auch die Resonanzdrehzahl liegen somit in einem Teillastbetrieb bzw. einem Teillastbereich. Dieser Teillastbereich reicht somit vom Anfang des ersten Rotordrehzahlbereichs bis zum Ende des dritten Rotordrehzahlbereichs. Der zweite Rotordrehzahlbereich ist somit in diesem Teillastbereich ein mittlerer Bereich und in diesem mittleren Bereich ist die Resonanzdrehzahl angesiedelt. Die Resonanzdrehzahl bzw. der Resonanzdrehzahlbereich ist somit die Drehzahl bzw. der Bereich, bei der bzw. bei dem die Anlagenresonanz angeregt wird.

Hierzu wird gemäß einer Ausführungsform vorgeschlagen, dass im zweiten Rotordrehzahlbereich die Ausgangsleistung der tonhaltigkeitsreduzierten Betriebskennlinie niedriger ist als die Ausgangsleistung der leistungsoptimalen Betriebskennlinie. Außerdem wird vorgeschlagen, dass der zweite Rotordrehzahlbereich insbesondere den Resonanzdrehzahlbereich umfasst, oder diesem entspricht.

Gemäß einer bevorzugten Ausführungsform ist die Windenergieanlage dadurch gekennzeichnet, dass eine Pitchsteuerung vorgesehen ist, die den Rotorblattwinkel entsprechend einer Pitchkennlinie in Abhängigkeit der erzeugten Ausgangsleistung in einem Teillastbetrieb einstellt. Weiterhin ist die Pitchkennlinie in Abhängigkeit der ausgewählten Betriebskennline aus mehreren Pitchkennlinien auswählbar. Besonders wird vorgeschlagen, dass für jede Betriebskennlinie eine eigene Pitchkennlinie vorgesehen ist.

Hierbei wurde erkannt, dass auch im Teillastbetrieb ein veränderlicher Pitchwinkel sinnvoll ist. Es wird somit im Teillastbetrieb kein vorbestimmter konstanter optimaler Winkel, also kein fester Teillastwinkel verwendet, sondern er wird den jeweiligen Bedingungen entsprechend eingestellt.

Weiterhin wurde erkannt, dass abhängig von der gewählten Betriebskennlinie, also insbesondere ob eine tonhaltigkeitsreduzierte, schallreduzierte oder leistungsoptimale Betriebskennlinie ausgebildet wird, eine entsprechende Pitchkennlinie ausgewählt. Die jeweilige Pitchkennlinie ist dabei vorzugsweise auf die jeweilige Betriebskennlinie abgestimmt. Damit kann der Betrieb der Windenergieanlage auch aerodynamisch auf die jeweilige Betriebskennline und damit an die jeweilige Betriebssituation angepasst werden.

Es wurde erkannt, dass durch die Änderung der drehzahlabhängigen Ausgangsleistung im Ergebnis auch bei gleichen Windverhältnissen unterschiedliche Rotordrehzahlen und damit Schnelllaufzahlen im Vergleich bspw. zur leistungsoptimalen Betriebskennlinie auftreten können. Solche Veränderungen besonders der Schnelllaufzahl werden durch die angepasste Pitchkennlinie berücksichtigt.

Gemäß einer Ausführungsform wird vorgeschlagen, dass die Pitchkennlinie in einen ersten, zweiten und dritten Ausgangsleistungsbereich unterteilt werden kann. Der erste Ausgangsleistungsbereich beginnt dabei bei einer Ausgangsleistung, die einer Ausgangsleistung entspricht, bei der die Windenergieanlage gestartet wird. Der zweite Ausgangsleistungsbereich schließt sich dem an und weist entsprechend höhere Ausgangsleistungen auf, als der erste Ausgangsleistungsbereich. Der dritte Ausgangsleistungsbereich weist höhere Ausgangsleistung auf, als der zweite Ausgangsleistungsbereich und reicht bis zu einer maximalen Ausgangsleistung des Teillastbetriebs bzw. bis zu einer Nennleistung des Generators.

Die Windenergieanlage ist in ihrem Betriebsverhalten im Teillastbetrieb somit vorzugsweise auch in drei Ausgangsleistungsbereiche eingeteilt. Auch damit ist ein gezielter Betrieb unter Berücksichtigung verschiedener Situation selbst im Teillastbetrieb möglich. Auch hierfür wurde erkannt, dass das Verwenden eines einzigen konstanten Rotorblattwinkels im Teillastbetrieb jedenfalls für die Umsetzung der Reduzierung der Tonhaltigkeit verbessert werden kann.

Dazu wird gemäß der einen Ausführungsform zudem vorgeschlagen, dass bei Auswahl der tonhaltigkeitsreduzierten Betriebskennlinie eine angepasste Pitchkennlinie vorgegeben wird, die auch als tonhaltigkeitsreduzierte Pitchkennlinie bezeichnet werden kann. Eine solche angepasste Pitchkennlinie weist vorzugsweise in dem ersten Ausgangsleistungsbereich einen größeren Rotorblattwinkel auf, als eine leistungsoptimale Pitchkennlinie in demselben Ausgangsleistungsbereich. Dabei ist eine leistungsoptimale Pitchkennlinie eine solche, die zur Verwendung im Zusammenhang mit einer leistungsoptimalen Betriebskennlinie vorgeschlagen wird.

Es wird somit vorgeschlagen, dass die Pitchkennlinie in Abhängigkeit der ausgewählten Betriebskennlinie angepasst werden kann. Es wird also hierfür eine angepasste Pitchkennlinie vorgeschlagen. Vorzugsweise enthält eine Steuerung der Windenergieanlage bereits eine oder mehrere entsprechende Pitchkennlinien und diese können dann je nach gewählter Betriebskennlinie ausgewählt werden.

Außerdem oder alternativ weist die angepasste Pitchkennlinie, also die tonhaltigkeitsreduzierte Pitchkennlinie, in dem zweiten Ausgangsleistungsbereich einen größeren Rotorblattwinkel auf, als eine leistungsoptimale Pitchkennlinie in demselben Ausgangsleistungsbereich.

Die angepasste Pitchkennlinie ist dabei im zweiten Ausgangsleistungsbereich größer, weist also einen größeren Rotorblattwinkel auf, als eine leistungsoptimale Pitchkennlinie in demselben Ausgangsleistungsbereich. Außerdem oder alternativ kann die angepasste Pitchkennlinie in den zweiten Ausgangsleistungsbereich einen kleineren Rotorblattwinkel aufweisen, als verglichen mit dem ersten Ausgangsleistungsbereich. Der Blattwinkel ist demnach im Vergleich zur leistungsoptimalen Pitchkennlinie größer und außerdem oder alternativ im Vergleich zum ersten Ausgangsleistungsbereich kleiner.

Vorzugsweise entspricht der zweite Ausgangsleistungsbereich dem zweiten Rotordrehzahlbereich. Das bedeutet besonders, dass die Windenergieanlage immer dann, wenn sie im zweiten Ausgangsleistungsbereich betrieben wird, diese auch im zweiten Rotordrehzahlbereich betrieben wird. Anschaulich gesprochen decken diese beiden Bereiche denselben Windgeschwindigkeitsbereich ab, ohne dass aber für die Einteilung die Windgeschwindigkeit dafür ausdrücklich aufgenommen wird. Vorzugsweise entspricht jeweils der erste, zweite und dritte Ausgangsleistungsbereich dem ersten, zweiten bzw. dritten Rotordrehzahlbereich. Die vorstehend gemachten Erläuterungen zu den einzelnen Bereichen können somit jeweils für die Pitchkennlinien und Betriebskennlinien gleichermaßen angewendet werden. Insbesondere kann gleichermaßen ein Wechsel zwischen dem jeweiligen ersten, zweiten und dritten Bereich sowohl bei der Pitchkennlinie als auch der Betriebskennlinie vorgenommen werden.

Gemäß einer Alternative wird der Pitchwinkel ebenfalls in Abhängigkeit der Rotordrehzahl eingestellt und entsprechend werden jeweils Pitchkennlinien in Abhängigkeit der Rotordrehzahl vorgegeben. Hierbei wird besonders bevorzugt vorgeschlagen, dass dieselben Rotordrehzahlbereiche für die Pitchkennlinie wie für die Betriebskennlinie zugrundegelegt werden.

Gemäß einer Ausschaltung wird vorgeschlagen, dass der zweite Ausgangsleistungsbereich einen Windgeschwindigkeitsbereich von etwa 4 bis 10 Meter pro Sekunde. entspricht. Der zweite Ausgangsleistungsbereich betrifft somit einen großen mittleren Bereich des Teillastbetriebs. Hier kann besonders die vorteilhafte Veränderung der Kennlinien angewendet werden, wobei die Anwendung in einem guten Abstand von einer Anlaufwindgeschwindigkeit erfolgt und ebenfalls nach oben hin in einem guten Abstand zu einem Übergang zum Volllastbetrieb liegt.

Außerdem oder alternativ wird vorgeschlagen, dass der zweite Rotordrehzahlbereich in einem Bereich von etwa 20% bis 80% einer Nenndrehzahl des Rotors liegt. Auch hierdurch wird für diesen zweiten Rotordrehzahlbereich ein großer mittlerer Bereich des Teilbetriebs für die beschriebenen Vorteile vorgesehen. Grenzbereiche nach oben und unten können hierbei ausgespart werden.

Vorzugsweise ist die Windenergieanlage dadurch gekennzeichnet, dass wenigstens in dem zweiten Rotordrehzahlbereich die tonhaltigkeitsreduzierte Betriebskennlinie gegenüber der leistungsoptimalen Betriebskennlinie reduzierte Werte der Ausgangsleistung aufweist und dass die angepasste Pitchkennlinie in demselben Bereich gegenüber einer leistungsoptimalen Pitchkennlinie geänderte Rotorblattwinkel aufweist. Dadurch wird einer Verschlechterung eines Leistungsbeiwertes, die sich durch eine Veränderung der Schnelllaufzahl ergibt, zumindest teilweise entgegengewirkt. Die angepasste Pitchkennlinie berücksichtigt somit diese Veränderung der Schnelllaufzahl.

Ergänzend kann die angepasste Pitchkennlinie auch in dem ersten Ausgangsleistungsbereich gegenüber der leistungsoptimalen Pitchkennlinie verändert werden, in dem die Pitchkennlinie dort größere Blattwinkel aufweist, als die leistungsoptimale Pitchkennlinie.

Durch die Vergrößerung der Blattwinkel kann besonders auch eine Verbesserung der Aerodynamik erreicht werden.

Gemäß einer Ausführungsform wird vorgeschlagen, dass bei der Verwendung der tonhaltigkeitsreduzierten Betriebskennlinie im Bereich von Windgeschwindigkeiten ab einer Startwindgeschwindigkeit wenigstens bis zu einer halben Nennwindgeschwindigkeit die Schnelllaufzahl mit steigender Windgeschwindigkeit streng monoton fallend ist. Insbesondere wird eine Steigung von weniger als -2 vorgeschlagen. Es kommt also bspw. auch ein Wert von -3 und -4 in Betracht. Werte bis -10 werden gemäß einer Ausführungsform vorgeschlagen. Dies betrifft eine auf die Nennwindgeschwindigkeit normierte Windgeschwindigkeit.

Vorzugsweise ist das Verhältnis einer Schnelllaufzahl bei Verwendung der tonhaltigkeitsreduzierten Betriebskennlinie zu einer Schnelllaufzahl bei Verwendung einer leistungsoptimalen Betriebskennlinie größer als 1. Die Schnelllaufzahl bei Verwendung der tonhaltigkeitsreduzierten Betriebskennlinie ist somit jeweils größer als die entsprechende Schnelllaufzahl bei Verwendung der leistungsoptimalen Betriebskennlinie.

Erfindungsgemäß wird auch ein Verfahren zum Parametrieren einer Windenergieanlage vorgeschlagen. Auch hier wird eine Windenergieanlage mit einem Turm und einem aerodynamischen Rotor zugrundegelegt. Der aerodynamische Rotor ist mit einer veränderlichen Rotordrehzahl betreibbar und weist mehrere Rotorblätter jeweils mit einem verstellbaren Rotorblattwinkel auf. Außerdem ist ein Generator zum Erzeugen einer elektrischen Ausgangsleistung vorgesehen.

Zum Parametrieren wird zunächst eine leistungsoptimale Betriebskennlinie bestimmt, die einen Zusammenhang zwischen der Rotordrehzahl und der Ausgangsleistung angibt. Dabei ist die leistungsoptimale Betriebskennlinie so gewählt, dass die Windenergieanlage maximale Ausgangsleistung abgibt, solange sie entsprechend dieser Betriebskennlinie betrieben wird.

Außerdem wird eine Resonanzdrehzahl erfasst, die eine Rotordrehzahl beschreibt, die eine Anlagenresonanz der Windenergieanlage anregt. Auch hier kann eine solche Anlagenresonanz eine Resonanz des Turmes, der Gondel oder anderer Elemente der Windenergieanlage sein. Es kommt auch eine Resonanz für die Windenergieanlage insgesamt in Betracht, bei der mehrere Elemente zusammen die Anlagenresonanz bestimmen, wie bspw. der Turm und die Gondel zusammen.

Weiterhin wird eine tonhaltigkeitsreduzierte Betriebskennlinie bestimmt, die im Resonanzdrehzahlbereich gegenüber der leistungsoptimalen Betriebskennlinie niedrigere Werte der Ausgangsleistung aufweist. Die tonhaltigkeitsreduzierte Betriebskennlinie wird dabei so bestimmt, dass sie auch im Resonanzdrehzahlbereich stetig ist. Es wird also tatsächlich eine tonhaltigkeitsreduzierte Betriebskennlinie bestimmt und nicht lediglich singuläre Drehzahlleistungswerte, die gezielt anzusteuern oder gezielt zu vermeiden sind.

Das Ergebnis dieser vorgeschlagenen Parametrierung ist besonders das Bestimmen der tonhaltigkeitsreduzierten Betriebskennlinie. Insgesamt werden aber wenigstens zwei Betriebskennlinien parametriert, nämlich die leistungsoptimale und die drehzahlreduzierte. Die Windenergieanlage kann dann wahlweise zumindest mit einer dieser beiden Betriebskennlinien betrieben werden. Sofern keine Anforderungen einer Reduzierung einer Tonhaltigkeit gestellt sind, weil bspw. eine Anregung einer solchen Tonhaltigkeit ohnehin nicht zu erwarten ist oder sich in der Nähe der Windenergieanlage niemand durch eine solche Tonhaltigkeit gestört fühlt, kann die Windenergieanlage mit der leistungsoptimalen Betriebskennlinie betrieben werden. Hierbei kann als leistungsoptimale Betriebskennlinie auch eine grundsätzlich bekannte Betriebskennlinie verwendet werden. Erst wenn der Bedarf für eine Reduzierung der Tonhaltigkeit besteht, kann diese tonhaltigkeitsreduzierte Betriebskennlinie verwendet werden. Vorzugsweise wird aber die Windenergieanlage dann dauerhaft mit der tonhaltigkeitsreduzierten Betriebskennlinie betrieben. Es ist grundsätzlich nicht vorgesehen, ständig zwischen leistungsoptimaler Betriebskennlinie und tonhaltigkeitsreduzierter Betriebskennlinie hin und her zu schalten.

Vorzugsweise wird eine Windenergieanlage gemäß wenigstens einer der vorstehend beschriebenen Ausführungsformen parametriert. Dabei wird wenigstens ein Element der folgenden Liste parametriert:
- die leistungsoptimale Pitchkennlinie,
- die angepasste Pitchkennlinie,
- der erste Rotordrehzahlbereich,
- der zweite Rotordrehzahlbereich,
- der dritte Rotordrehzahlbereich,
- der erste Ausgangsleistungsbereich,
- der zweite Ausgangsleistungsbereich,
- der dritte Ausgangsleistungsbereich und
- die schallreduzierte Betriebskennlinie.

All diese Elemente sind bereits oben im Zusammenhang mit Ausführungsformen der Windenergieanlage beschrieben worden und es wird vorgeschlagen, die Parametrierung genau so vorzunehmen, dass das herauskommt, was oben im Zusammenhang mit wenigstens einer Ausführungsform der Windenergieanlage beschrieben wurde.

Gemäß einer Ausführungsform wird vorgeschlagen, dass das Erfassen der Resonanzdrehzahl so erfolgt, dass die Rotordrehzahl variiert wird und dazu eine Tonhaltigkeit in der Umgebung der Windenergieanlage erfasst wird. Als Resonanzdrehzahl wird dann die Rotordrehzahl verwendet, bei der die Tonhaltigkeit ein Maximum aufweist. Das erfolgt vorzugswiese in einem vorbestimmten Testfrequenzbereich, der in einem Bereich zwischen 10Hz und 100 Hz liegt.

Die Tonhaltigkeit ist ein dominantes Geräusch besonders einer Frequenz. Es wird somit nicht die Schallleistung eines Schallleistungsspektrums insgesamt erfasst, sondern gezielt der Anteil eines solchen Geräusches einer Frequenz betrachtet. Ein solches Geräusch einer Frequenz nimmt dann besonders stark zu, wenn die Rotordrehzahl einen Wert aufweist, mit dem die Windenergieanlage so angeregt wird, dass dieses Geräusch entsteht. Insbesondere ist dies ein Körperschall, der durch eine entsprechende Bewegung der Windenergieanlage von dieser Windenergieanlage abgegeben wird.

Basierend auf einer so erfassten Resonanzdrehzahl kann dann auch die tonhaltigkeitsreduzierte Betriebskennlinie bestimmt werden. Darauf basierend kann dann eine angepasste Pitchkennlinie bestimmt werden. Eine solche angepasste Pitchkennlinie kann auch als tonhaltigkeitsreduzierte Pitchkennlinie bezeichnet werden, weil sie zumindest einer tonhaltigkeitsreduzierten Betriebskennlinie zugeordnet werden kann.

Vorzugsweise erfolgt das Bestimmen der tonhaltigkeitsreduzierte Betriebskennlinie so, dass die Ausgangsleistung im Resonanzdrehzahlbereich, insbesondere bei der Resonanzdrehzahl, gegenüber der leistungsoptimalen Betriebskennlinie soweit reduziert wird, dass die in der Umgebung der Windenergieanlage aufgenommenen Tonhaltigkeit einen vorbestimmten Grenzwert unterschreitet. Vorzugsweise wird das Reduzieren der Ausgangsleistung und Aufnehmen der Tonhaltigkeit solange wiederholt bzw. in einem kontinuierlichen Prozess vorgenommen, bis der vorbestimmte Grenzwert unterschritten wird.

Auch hier wird somit ein spezielles Geräusch einer Frequenz untersucht, nämlich besonders jenes, welches sich bei der Resonanzdrehzahl einstellt, besonders wenn die Resonanzdrehzahl wie vorstehend beschrieben aufgenommen wurde. Vorzugsweise wird somit die Anlage mit der Resonanzdrehzahl betrieben und die Leistung solange reduziert, bis dieses Geräusch mit der einen Frequenz den vorbestimmten Grenzwert unterschreitet. Die tonhaltigkeitsreduzierte Betriebskennlinie kann dann so ausgelegt werden, dass sie bei dieser Resonanzdrehzahl den so gefundenen niedrigen Wert der Generatordrehzahl aufweist. Dabei wird die Betriebskennlinie aber so vorgegeben, dass sie stetig ist, insbesondere stetig differenzierbar und streng monoton steigend. Das Ergebnis ist dann eine Betriebskennlinie, die bei der Resonanzdrehzahl einen geringen Leistungswert aufweist. Das bedeutet aber nicht, dass dadurch insgesamt viel weniger Leistung erzeugt wird, als im Vergleich zur Leistung der leistungsoptimalen Betriebskennlinie bei derselben Drehzahl. Vielmehr stellt sich ein anderer Betriebspunkt ein. Durch eine streng monoton steigende Betriebskennlinie wird sich ein Betriebspunkt höherer Drehzahl einstellen. Es ist auch zu beachten, dass ein Betrieb gemäß einer tonhaltigkeitsreduzierten Betriebskennlinie, also überhaupt die Reduktion der Tonhaltigkeit, auch ein erhöhtes oder zumindest nicht reduziertes Schallleistungsspektrum bedeuten kann. Auch kann ein Betrieb, bei dem der Schallleistungspegel reduziert ist eine Erhöhung oder zumindest Nichtreduzierung der Tonhaltigkeit bedeuten. Für die Tonhaltigkeit bzw. das Wahrnehmen eines Geräusches einer isolierten Frequenz, insbesondere das Verhältnis eines solchen dominanten Geräusches einer Frequenz im Vergleich zum restlichen Schallleistungsspektrum von Bedeutung.

Erfindungsgemäß wird auch Verfahren zum Betreiben einer Windenergieanlage vorgeschlagen. Auch hier weist die Windenenergieanlage einen Turm, einen aerodynamischen Rotor und einen Generator zum Erzeugen elektrischer Leistung auf, wie oben bereits im Zusammenhang mit einer erfindungsgemäß erläuterten Windenergieanlage beschrieben wurde.

Zum Betreiben der Windenergieanlage wird eine Betriebskennlinie vorgegeben, die einen Zusammenhang zwischen der Rotordrehzahl und der Ausgangsleistung angibt und die Ausgangsleistung entsprechend der Betriebskennlinie in Abhängigkeit der Rotordrehzahl eingestellt wird. Dabei ist als Betriebskennlinie eine tonhaltigkeitsreduzierte Betriebskennlinie auswählbar. Diese ist so ausgelegt, dass eine Anregung einer Anlagenresonanz der Windenergieanlage gegenüber einer leistungsoptimalen Betriebskennlinie reduziert ist, ohne dass aber eine dieser Anlagen resonanzanregende Drehzahl ausgespart wird. Insbesondere wird vorgeschlagen, dass die Windenergieanlage so betrieben wird, wie sich auch aus den Erläuterungen der vorstehend beschriebenen Ausführungsformen erfindungsgemäßer Windenergieanlagen ergibt. Vorzugsweise wird auch vorgeschlagen, dass eine Windenergieanlage gemäß einer vorstehend beschriebenen Ausführungsform verwendet wird.

Gemäß einer bevorzugten Ausführungsform wird vorgeschlagen, dass in Abhängigkeit einer externen Vorgabe oder einer Tageszeit umgeschaltet wird zwischen einem Betrieb der Windenergieanlage mit der tonhaltigkeitsreduzierten Betriebskennlinie, einem Betrieb der Windenergieanlage mit der leistungsoptimalen Betriebskennlinie, die so ausgelegt ist, dass eine Leistungsentnahme aus dem Wind maximiert wird, und einem Betrieb der Windenergieanlage mit einer schallreduzierten Betriebskennlinie, die so ausgelegt ist, dass Schallemissionen der Windenergieanlage, besonders ein Schallleistungsspektrum der Schallemissionen, gegenüber der leistungsoptimalen Betriebskennlinie reduziert werden. Es kann somit zwischen einem leistungsoptimalen Betrieb, einem tonhaltigkeitsreduzierten Betrieb und einem schallreduzierten Betrieb gewählt werden. Die Wahl erfolgt so, dass eine entsprechende Betriebskennlinie ausgewählt wird. Auch hier ist nochmal zu betonen, dass sich ein tonhaltigkeitsreduzierter Betrieb und damit eine tonhaltigkeitsreduzierte Betriebskennlinie von einem schallreduzierten Betrieb bzw. einer schallreduzierten Betriebskennlinie grundsätzlich unterscheidet.

Außerdem wird ganz grundsätzlich eine Windenergieanlage vorgeschlagen, die wenigstens einer vorstehend beschriebenen Ausführungsform einer Windenergieanlage genügt und gemäß einer eine Parametrierung beschreibenden Ausführungsform parametriert wurde und außerdem oder alternativ mit einem Verfahren gemäß einer beschriebenen Ausführungsform beschrieben wird.

Die Erfindung wird nun nachfolgend beispielhaft anhand von Ausführungsformen unter Bezugnahme auf die begleitenden Figuren näher beschrieben.
- Figur 1: zeigt eine Windenergieanlage in einer perspektivischen Darstellung.
- Figuren 2 und 3: zeigen jeweils ein Diagramm mit unterschiedlichen Betriebskennlinien.
- Figuren 4 und 5: zeigen jeweils ein Diagramm mit unterschiedlichen Verläufen von Schnelllaufzahlen.
- Figur 6: zeigt ein Diagramm mit Verläufen unterschiedlicher Leistungsbeiwerte.
- Figuren 7 und 8: zeigen jeweils ein Diagramm mit unterschiedlichen Pitchkennlinien.
- Figur 9: zeigt schematisch ein Diagramm eines Schallleistungspegels.
- Figur 10: zeigt schematisch eine Regelungsstruktur zur Umsetzung einer Regelung gemäß einer Ausführungsform der Erfindung.

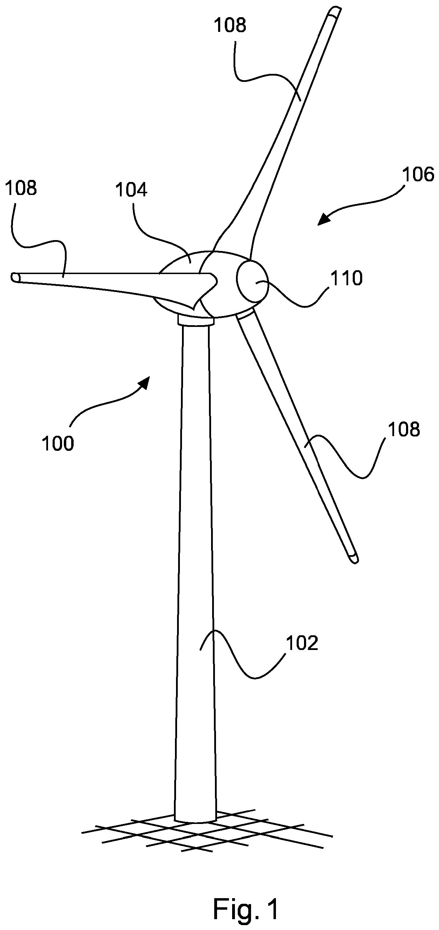

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Erfindungsgemäß wurde erkannt, dass beim Betrieb von Windenergieanlagen nicht nur Schall entsteht, der durch die Umströmung des Rotorblattes verursacht wird, sondern es kann auch Schall durch Schwingungen in den Türmen oder Maschinenhäusern oder anderen Elementen entstehen, insbesondere bei Resonanzen. Erhöhte Schallleistungspegel durch diesen Körperschall treten oftmals in engen Frequenzbändern auf, sind oftmals niederfrequent und werden vom menschlichen Ohr als unangenehm empfunden. In Frequenzspektren tritt dieser körperschallinduzierte Lärm im jeweiligen Frequenzband als Peak auf und wird mit einem Tonhaltigkeitszuschlag in der Schallemissionsbewertung der Windenergieanlage berücksichtigt.

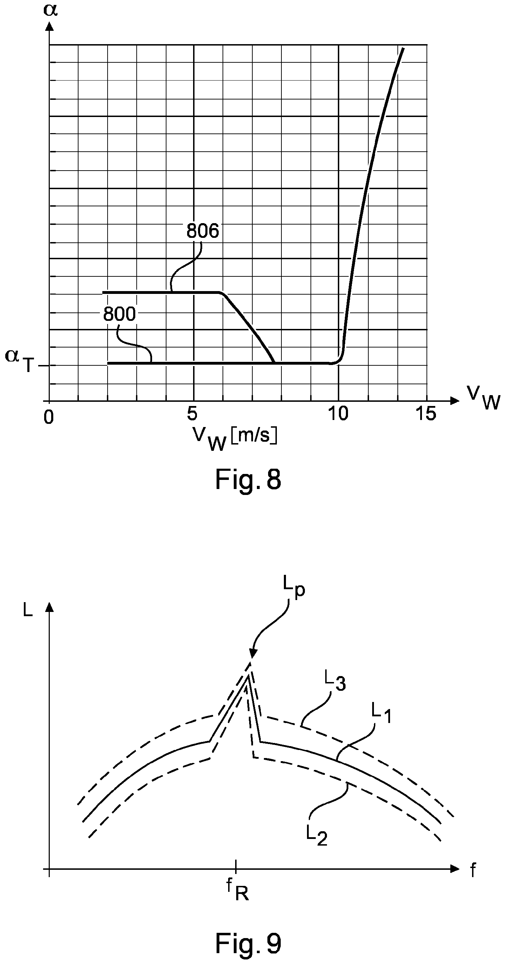

Figur 9 veranschaulicht ein solches Frequenzspektrum. Dort ist als Diagramm der Schallleistungspegel L in Abhängigkeit der Frequenz f rein schematisch aufgetragen. Als Schallleistungspegel L₁ ist ein Schallleistungspegel schematisch mit einer durchgezogenen Linie dargestellt. Ein dazu im Wesentlichen verringerter Schallleistungspegel L₂ und ein insgesamt erhöhter Schallleistungspegel L₃ sind ebenfalls schematisch zum Zwecke der Erläuterung eingezeichnet.

Bei der Resonanzfrequenz f_{R} ist ein Peak L_{P} vorhanden, der eine Tonhaltigkeit zeigt. Dabei ist zu erkennen, dass sich dieser Peak L_{P} als noch deutlicher zeigt, wenn der Schallleistungspegel insgesamt verringert ist, wie das bei dem verringerten Schallleistungspegel L₂ der Fall ist. Umgekehrt kann die Dominanz des Peaks bei dem erhöhten Schallleistungspegel L₃ abnehmen.

Erfindungsgemäß wurde nun erkannt, dass das Auftreten von Resonanzen und der daraus resultierenden Tonhaltigkeit durch eine geschickte Auswahl der Betriebskennlinie, also der Vorgabe der elektrischen Ausgangsleistung in Abhängigkeit der Generatordrehzahl, minimiert werden kann. In dem Fall, dass die Resonanz und die damit verbundene Tonhaltigkeit durch den Generator verursacht wird, kann die Tonhaltigkeit durch Anpassung der Betriebskennlinie besonders effektiv minimiert werden.

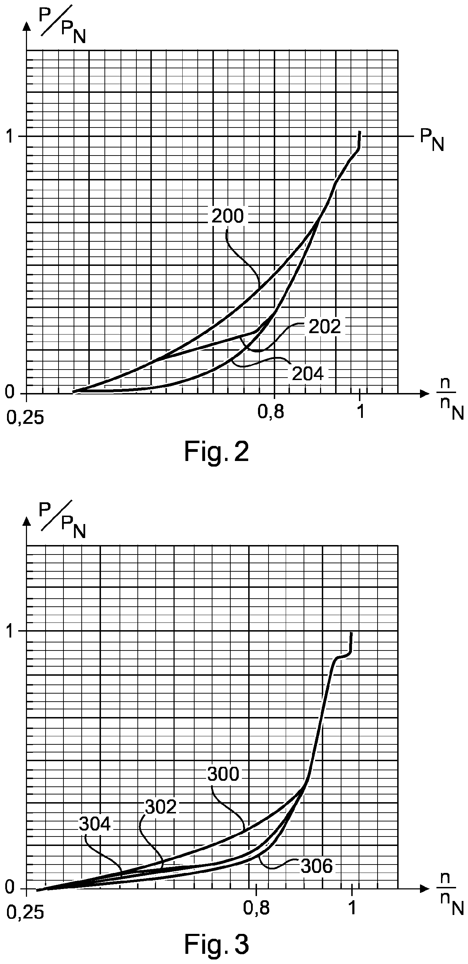

Figur 2 zeigt dafür beispielhaft eine Veränderung von Betriebskennlinien. Figur 2 zeigt dabei drei verschiedene Betriebskennlinien, also den funktionalen Zusammenhang zwischen der elektrischen Ausgangsleistung P der Windenergieanlage und der Rotordrehzahl n. Neben einer leistungsoptimalen Betriebskennlinie 200 sind auch zwei tonhaltigkeitsreduzierte Kennlinien 202 und 204 gezeigt. Diese leistungsoptimale Kennlinie beschreibt somit wie die Anlage im leistungsoptimalen Betriebsmodus betrieben wird, wenn keine Tonhaltigkeit der Anlage auftritt bzw. nicht reduziert werden muss, und entspricht damit einer Kennlinie des Standes der Technik.

Für den Fall, dass Tonhaltigkeit an der Anlage auftritt und reduziert werden muss, werden die beiden tonhaltigkeitsreduzierten Betriebskennlinien 202 und 204 vorgeschlagen. Bei der zugrundeliegenden Windenergieanlage lag ein erhöhter Schallleistungspegel in Form eines Peaks in einem Frequenzbereich vor, der besonders bei einer normierten Drehzahl im Bereich von 0,8 angeregt wurde. Somit ist diese normierte Drehzahl von 0,8 hier eine bzw. die Resonanzdrehzahl.

Zur Vermeidung dieser Tonhaltigkeit wird somit vorgeschlagen, die Leistungsaufnahme des Generators in diesem Drehzahlbereich zu reduzieren. Dazu können die beiden tonhaltigkeitsreduzierten Betriebskennlinien 202 und 204 verwendet werden. Mit beiden tonhaltigkeitsreduzierten Betriebskennlinien 202 und 204 wird erreicht, dass bei der normierten Resonanzdrehzahl von 0,8 die Leistung im Vergleich zur leistungsoptimalen Betriebskennlinie um über 40 Prozent reduziert wurde. Dabei unterscheiden sich die beiden tonhaltigkeitsreduziert Betriebskennlinien 202 und 204 strukturell. Die tonhaltigkeitsreduzierte Betriebskennlinie 204 sieht bereits am Anfang kleinere Leistungen vor, als bei der leistungsoptimalen Kennlinie, während die andere tonhaltigkeitsreduziert Kennlinie 202 bei kleinen Drehzahlen zunächst mit der leistungsoptimalen Kennlinie 200 übereinstimmt. In jedem Fall sind aber beide tonhaltigkeitsreduzierten Betriebskennlinien 202 und 204 Betriebskennlinien mit kontinuierlichem Verlauf, die auch im Bereich der Resonanzdrehzahl stetig, stetig differenzierbar und im Übrigen auch streng monoton steigend sind. Die tonhaltigkeitsreduzierte Kennlinien 202 und 204 können somit dem Grunde nach ganz ähnlich der Betriebssteuerung bzw. Anlagenregelung zugrundegelegt werden, wie die leistungsoptimale Betriebskennlinie 200.

Figur 3 zeigt zur Figur 2 lediglich ein weiteres Beispiel. Bei dem Diagramm der Figur 3 ist der kritische normierte Drehzahlbereich auch etwa bei 0,8. Auch hier ist eine leistungsoptimale Betriebskennlinie 300 eingezeichnet sowie drei tonhaltigkeitsreduzierte Betriebskennlinien 302, 304 und 306. Sämtliche tonhaltigkeitsreduzierten Betriebskennlinien 302, 304 und 306 und im Übrigen auch die der Figur 2 sind Beispiele für erfindungsgemäße tonhaltigkeitsreduzierte Betriebskennlinien.

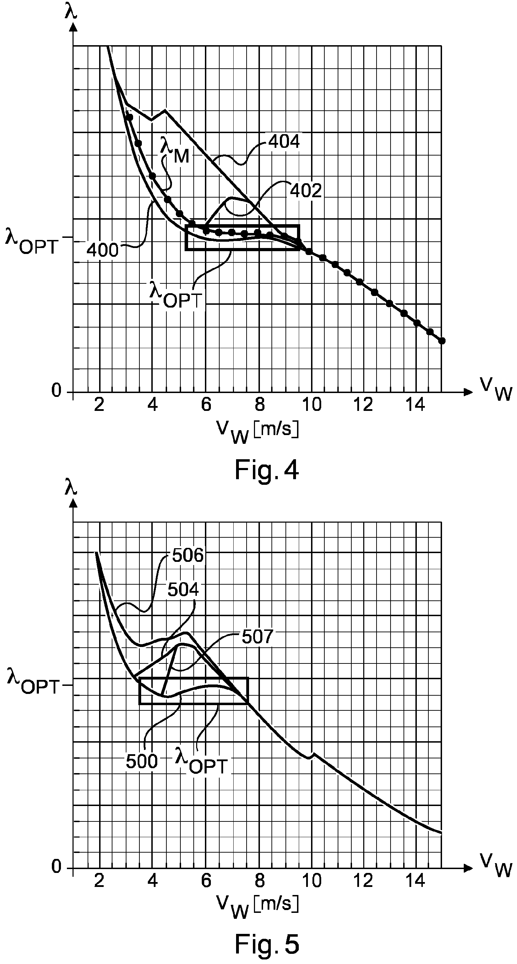

Auch die drei tonhaltigkeitsreduzierten Betriebskennlinien 302, 304 und 306 führen bei der normierten Resonanzdrehzahl, die hier 0,8 beträgt, zu einer Verringerung der Leistung auf etwa die Hälfte im Vergleich zur leistungsoptimalen Betriebskennlinie. Erfindungsgemäß wurde aber auch erkannt, dass durch die hier besonders zu den Figuren 2 und 3 beschriebene Vorgehensweise zwar eine auftretende Tonhaltigkeit vermieden oder verringert werden kann, allerdings durch die Anpassung der Betriebskennlinie der optimale Schnelllaufzahlbereich des Rotorblattes verlassen wird, nämlich hin zu höheren Schnelllaufzahlen. Dies ist an zwei Beispielen in den Figuren 4 und 5 erläutert.

Die Rotorblätter drehen sich bei den vorgeschlagenen tonhaltigkeitsreduzierten Betriebskennlinien bei gleicher Windgeschwindigkeit nämlich schneller als bisher, also schneller als bei Verwendung der jeweils gezeigten leistungsoptimalen Betriebskennlinie. Dazu wurde erkannt, dass sich die axiale Induktion in der Rotorblattebene erhöht, was typischerweise zu verringerten Leistungsbeiwerten führt. Es wurde somit erkannt, dass somit zunächst, ohne weitere Lösungsvorschläge, die in den Figuren 2 und 3 erläuterte Vermeidung oder Verringerung der Tonhaltigkeit zu einem Ertragsverlust der Windenergieanlage führen kann.

Figur 4 und Figur 5 zeigen grundsätzlich die Verläufe der Schnelllaufzahlen zu den entsprechenden Betriebskennlinien der Figuren 2 bzw. 3, wenn keine Anpassung der Pitchkennlinien vorgenommen wird. Dabei korrespondieren die Verläufe 400, 402 und 404 der Schnelllaufzahl λ mit den Betriebskennlinien 200, 202 bzw. 204 der Figur 2. In Figur 4 ist außerdem noch eine Kennlinie mit einigen Messpunkten eingezeichnet und diese Kennlinie gibt Messungen wieder und bestätigt somit die übrigen Verläufe, die berechnet bzw. simuliert werden. In Figur 5 korrespondieren die Schnelllaufzahlenverläufe 500, 502, 504 und 506 mit den Betriebskennlinien 300, 302, 304 bzw. 306 der Figur 3. In beiden Figuren 4 und 5 ist auch ein optimaler Schnelllaufzahlbereich λ_{OPT} eingezeichnet. Es ist zu erkennen, dass die Verläufe der Schnelllaufzahlen, die nicht zur leistungsoptimalen Betriebskennlinie gehören, zu einem großen Teil aus dem optimalen Schnelllaufzahlbereich herausfallen. Es wurde somit erkannt, dass insoweit die Windenergieanlagen nicht optimal laufen und dazu wird eine Abhilfe vorgeschlagen.

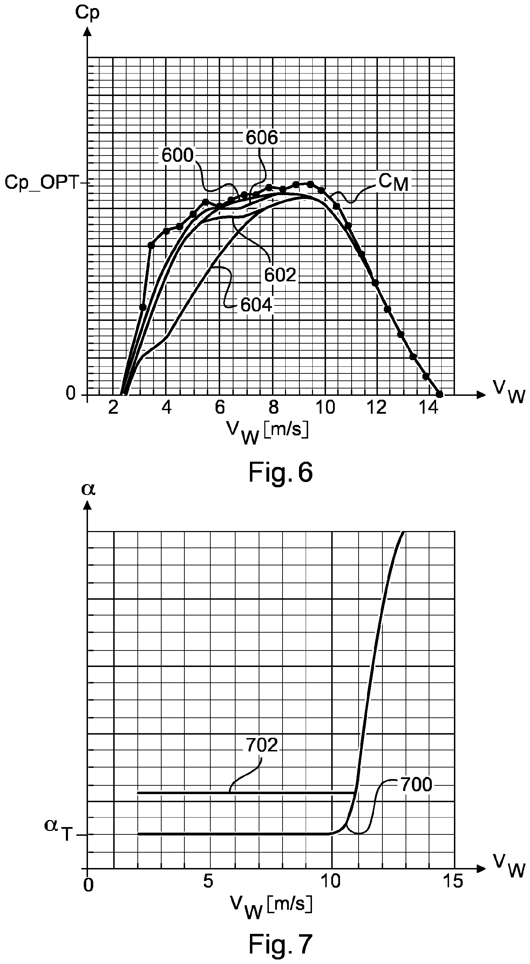

Für den Fall der Figur 2 ist ein solcher Verlust des Leistungsbeiwertes cₚ in Figur 6 dargestellt. Die Verläufe der cₚ-Werte 600, 602 und 604 entsprechen den Betriebskennlinien 200, 202 bzw. 204 der Figur 2. Es ist der optimale C_{P}-Wert C_{P_OPT} eingezeichnet und es ist zu erkennen, dass für die tonhaltigkeitsreduzierte Betriebskennlinie 604 jedenfalls für geringere Windgeschwindigkeiten V_{W} sich ein deutlich verringerter cₚ-Wert einstellt. Auch die tonhaltigkeitsreduzierte Betriebskennlinie 202 führt noch zu einem schlechteren Verlauf 602 für den cₚ-Wert. Im Übrigen ist in Figur 6 auch noch ein Messwert c_{M} für den cₚ-Wert eingezeichnet.

Es ist somit jeweils ein teilweise deutlicher Abfall des Leistungsbeiwertes bis zur Windgeschwindigkeit von etwa 10 Metern pro Sekunde festzustellen. Um diesen Ertragsverlust teilweise oder sogar komplett zu kompensieren, wird daher außerdem vorgeschlagen, neben der Betriebskennlinie auch die Pitchkennlinie zu modifizieren. Es wurde somit auch erkannt, dass ein wichtiger Aspekt ist, dass mit der Änderung der Betriebskennlinie auch eine Änderung der Pitchkennlinie vorgenommen wird. Als Pitchkennlinie wird der in der Anlagensteuerung hinterlegte Zusammenhang zwischen der elektrischen Ausgangsleistung Pₑₗ und dem Pitchwinkel der Rotorblätter bezeichnet. Als elektrische Ausgangsleistung wird die Leistung angesehen, die die Anlage tatsächlich abgibt und in ein elektrisches Versorgungsnetz einspeisen kann. Dabei kommen verschiedene Möglichkeiten der Erfassung dieser Ausgangsleistung in Betracht, wie bspw. diese aus dem Gleichspannungszwischenkreis zu bestimmen, wenn ein Vollumrichterkonzept mit Gleichspannungszwischenkreis verwendet wird. Es kommt aber auch eine Strom-Spannungsmessung an den Ausgangsklemmen der Windenergieanlage in Betracht. Die Ausgangsleistung kann daher auch synonym als Anlagenleistung bezeichnet werden.

Es wird daher nun vorgeschlagen, die Pitchkennlinie anzupassen, um zu vermeiden, dass bei der vorliegenden Anhebung der Schnelllaufzahlen im Betrieb mit dem erfindungsgemäßen Kennlinien mit Ertragungsverlusten der Windenergieanlage zu rechnen ist. Wichtig für die vorliegende Erfindung, zumindest für eine Ausführungsform, ist somit, eine neue Betriebskennlinie als auch eine neue Pitchkennlinie vorzuschlagen, nämlich insbesondere eine tonhaltigkeitsreduzierte Betriebskennlinie und eine dazu angepasste Pitchkennlinie, die auch als tonhaltigkeitsreduzierte Pitchkennlinie bezeichnet werden kann.

Figuren 7 und 8 zeigen jeweils eine Pitchkennlinie 700 bzw. 800 für eine leistungsoptimale Betriebskennlinie 200 bzw. 300 gemäß Figur 2 bzw. Figur 3 und eine angepasste Pitchkennlinie 702 bzw. 806, die der jeweiligen tonhaltigkeitsreduzierten Betriebskennlinie 202 bzw. 306 zugeordnet ist. Es ist jeweils ein Teillastwinkel α_{T} eingezeichnet, der den Blattwinkel bezeichnet, der im normalen leistungsoptimalen Betrieb als Blattwinkel im Teillastbetrieb verwendet wird.

In der Figur 7 ist dabei zu erkennen, dass der minimale Pitchwinkel gegenüber dem Teillastwinkel α_{T} angehoben wurde. Dadurch konnten Ertragsverluste durch die vorgeschlagene tonhaltigkeitsreduzierte Betriebskennlinie kompensiert werden. Dazu ist in der Figur 6 mit dem Verlauf des Leistungsbeiwertes 606 zu erkennen, dass der Leistungsbeiwert durch diese Maßnahme, also durch die Veränderung des Blattwinkels 702 verbessert werden konnte. Dieser veränderte Verlauf 606 des Leistungsbeiwertes unterscheidet sich nun nur noch wenig von dem Verlauf 600 des Leistungsbeiwertes für die leistungsoptimale Betriebskennlinie.

Figur 8 zeigt dabei einen Verlauf 806 des Blattwinkels bzw. eine Pitchkennlinie, bei dem bzw. der Verlauf des Pitchwinkels der leistungsoptimalen Betriebskennlinie in etwas komplexerer Form modifiziert wurde, um Ertragsverluste zu vermeiden. Bis etwa 6 m/s wird der minimale Pitchwinkel angehoben, um ihn dann bis etwa 8 m/s wieder auf den Teillastwinkel α_{T} zu reduzieren.

Die Figuren 7 und 8 zeigen die Verläufe der Blattwinkel in Abhängigkeit der Windgeschwindigkeit V_{W}. Für eine praktische Umsetzung wird allerdings vorgeschlagen, Pitchkennlinien zu hinterlegen. Hier kann der Blattwinkel besonders von einer Rotordrehzahl abhängen und davon abhängig eingestellt werden. Über die Rotordrehzahl ist etwa der jeweilige Betriebspunkt der Windenergieanlage gut erfassbar und entsprechend kann ein Blattwinkel ausgewählt werden. Im Ergebnis wird ein Blattwinkel in Abhängigkeit der Windgeschwindigkeit eingestellt werden, nämlich so wie in den Figuren 7 oder 8 dargestellt. Es wird dafür allerdings nicht die Windgeschwindigkeit betrachtet, jedenfalls nicht ausschließlich.

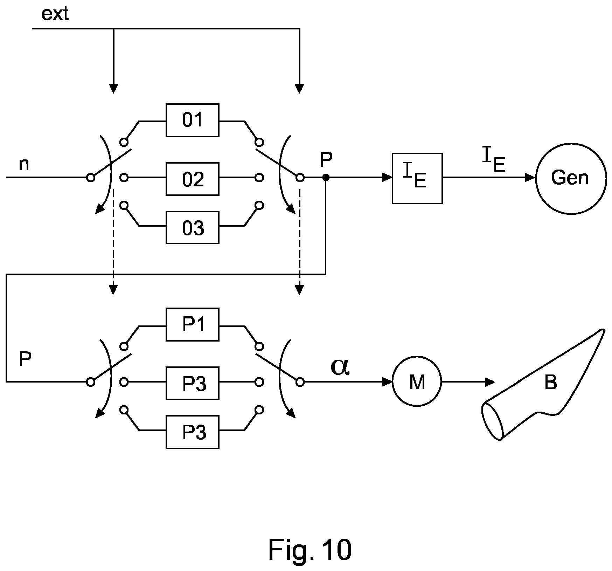

Figur 10 veranschaulicht eine mögliche Umsetzung. Dort sind Betriebskennlinien 01, 02 und 03 hinterlegt und zwischen ihnen kann über ein externes Signal ext umgeschaltet werden. Die Eingangsgrößer dieser Betriebskennlinien O1, 02 und 03 bildet die Drehzahl n und als Ausgangswerte ergibt sich eine Leistung P. Diese Leistung P soll dann für den Generator eingestellt werden. Eine Möglichkeit besteht darin, dies zumindest teilweise über die Veränderung eines Erregerstroms durchzuführen, was durch den Block I_{E} angedeutet ist. Das Ergebnis ist dann ein Erregerstrom I_{E}, der direkt an den Läufer des Generators Gen eingegeben werden kann, jedenfalls dann, wenn es sich bei dem Generator um eine fremderregte Synchronmaschine handelt. Es kommen aber auch andere Möglichkeiten in Betracht, wie bspw. einen Statorstrom des Generators zu beeinflussen.

Außerdem sind drei Pitchkennlinien P1, P2 und P3 hinterlegt, zwischen denen ebenfalls ausgewählt werden kann. Die Darstellung der Figur 10 soll andeuten, dass dasselbe externe Signal ext auch zu einer entsprechenden Auswahl zwischen den Pitchkennlinien verwendet wird. Dabei soll die Auswahl so vorgenommen werden, dass jeweils zu der Betriebskennlinie O1, 02 oder 03 eine Pitchkennlinie P1, P2 bzw. P3 zugeordnet ist und somit also die Betriebskennlinie O1 mit der Pitchkennlinie P1, die Betriebskennlinie 02 mit der Pitchkennlinie P2 und die Betriebskennlinie 03 mit der Pitchkennlinie P3 zusammen betrieben bzw. verwendet wird. Die Betriebskennlinie O1 kann hierbei für eine leistungsoptimale Betriebskennlinie stehen und die Betriebskennlinie 02 kann für eine tonhaltigkeitsreduzierte Betriebskennlinie stehen. Die Betriebskennlinie 03 kann bspw. für eine schallreduzierte Betriebskennlinie stehen, oder auch für eine alternative, also weitere tonhaltigkeitsreduzierte Betriebskennlinie.

Die Struktur der Figur 10 zeigt, dass die Betriebskennlinien P1, P2 bzw. P3 als Eingangsgröße die Leistung P erhalten. Der Einfachheit halber wird hier die Leistung P verwendet, die den Ausgang jeweils einer der drei Pitchkennlinien P1, P2 und P3 bildet. Das soll hier veranschaulichend für die Verwendung der Ausgangsleistung der Windenergieanlage stehen. Statt der Leistung P kann auch, bei entsprechend angepasster Pitchkennlinie, die Rotordrehzahl oder eine äquivalente Drehzahl verwendet werden, besonders bei Verwendung eines Getriebes, was üblicherweise allerdings besser zu vermeiden ist, ist es letztlich gleichwirkend, ob nun die Rotordrehzahl des aerodynamischen Rotors oder eine Generatordrehzahl verwendet wird, um nur ein Beispiel zu nennen. Jedenfalls ist der Ausgangswert der Pitchkennlinien P1, P2 und P3 der Blattwinkel a. Dieser kann an jeweils einen Verstellmotor gegeben werden, der hier als Motor M gekennzeichnet ist, der wiederum den jeweiligen Blattwinkel des Rotorblattes B einstellt.

Ggf. kann es vorteilhaft sein, zwischen der Leistungseinstellung des Generators durch die jeweilige Betriebskennlinie einerseits und der Verstellung des Blattwinkels durch die entsprechende Pitchkennlinie andererseits eine unterschiedliche Dynamik vorzusehen, um ein stabiles Verhalten sicherzustellen. Bei der in Figur 10 veranschaulichten Struktur besonders durch die Verwendung des Stellgliedes I_{E} zur Verstellung des Erregerstroms dürfte allerdings die Verstellung der Leistung des Generators bereits deutlich schneller als die Blattverstelllung sein, so dass dadurch bereits unterschiedliche Dynamiken und damit eine Stabilität der Regelung gegeben ist.

## Patentansprüche

1. Windenergieanlage (100) mit
- einem Turm (102),
- einem aerodynamischen Rotor (106), wobei der aerodynamische Rotor (106)
- mit einer veränderlichen Rotordrehzahl (n) betreibbar ist und
- mehrere Rotorblätter (108) jeweils mit einem verstellbaren Rotorblattwinkel (a) aufweist,
- einem Generator (Gen) zum Erzeugen einer elektrischen Ausgangsleistung,
wobei
- zum Betreiben der Windenergieanlage (100) eine Betriebskennlinie (200, 202, 204, 300, 302, 304, 306) vorgegeben wird, die einen Zusammenhang zwischen der Rotordrehzahl (n) und der Ausgangsleistung (P) angibt und
- eine Steuerung vorgesehen ist, die die Ausgangsleistung (P) entsprechend der Betriebskennlinie (200, 202, 204, 300, 302, 304, 306) in Abhängigkeit der Rotordrehzahl (n) einstellt, wobei
- als Betriebskennlinie (200, 202, 204, 300, 302, 304 ,306) eine tonhaltigkeitsreduzierte Betriebskennlinie auswählbar ist (202, 204, 302, 304, 306), die so ausgelegt ist, dass eine Anregung einer Anlagenresonanz der Windenergieanlage (100) gegenüber einer leistungsoptimalen Betriebskennlinie (200, 300) reduziert ist, ohne eine diese Anlagenresonanz anregende Drehzahl (2) auszusparen, **dadurch gekennzeichnet, dass**
- eine Pitchsteuerung vorgesehen ist, die den Rotorblattwinkel (a) entsprechend einer Pitchkennlinie (700, 702, 800, 806) in Abhängigkeit der erzeugten Ausgangsleistung in einem Teillastbetrieb einstellt, und wobei die Pitchkennlinie (700, 702, 800, 806) in Abhängigkeit der ausgewählten Betriebskennlinie (200, 202, 204, 300, 302, 304, 306) angepasst wird, insbesondere aus mehreren Pitchkennlinien (700, 702, 800, 806) auswählbar ist, insbesondere ist für jede Betriebskennlinie eine eigene Pitchkennlinie vorgesehen.

2. Windenergieanlage (100) nach Anspruch 1,
**dadurch gekennzeichnet, dass**
die Betriebskennlinie (200, 202, 204, 300, 302, 304, 306) wenigstens auswählbar ist aus
- der tonhaltigkeitsreduzierten Betriebskennlinie (202, 204, 302, 304, 306),
- der leistungsoptimalen Betriebskennlinie (200, 300), die so ausgelegt ist, dass eine Leistungsentnahme aus dem Wind maximiert wird, und
- einer schallreduzierten Betriebskennlinie, die so ausgelegt ist, dass Schallemissionen der Windenergieanlage (100), besonders ein Schallleistungsspektrum der Schallemissionen, gegenüber der leistungsoptimalen Betriebskennlinie (200, 300) reduziert sind.

3. Windenergieanlage (100) nach Anspruch 1 oder 2,
**dadurch gekennzeichnet, dass**
- die tonhaltigkeitsreduzierte Betriebskennlinie (202, 204, 302, 304, 306) in einem Resonanzdrehzahlbereich einer eine Anlagenresonanz der Windenergieanlage (100) anregenden Rotordrehzahl (n) geringere Werte der Ausgangsleistung (P) aufweist als die leistungsoptimale Betriebskennlinie (200, 300) in demselben Resonanzdrehzahlbereich,
und wobei die tonhaltigkeitsreduzierte Betriebskennlinie (202, 204, 302, 304, 306) auch im Resonanzdrehzahlbereich stetig ist, wobei insbesondere die tonhaltigkeitsreduzierte Betriebskennlinie (202, 204, 302, 304, 306) auch im Resonanzdrehzahlbereich stetig differenzierbar und streng monoton steigend ist.

4. Windenergieanlage (100) nach einem der vorstehenden Ansprüche,
**dadurch gekennzeichnet, dass**
- die tonhaltigkeitsreduzierte Betriebskennlinie (202, 204, 302, 304, 306) in einen ersten, zweiten und dritten Rotordrehzahlbereich eingeteilt werden kann und
- der erste Rotordrehzahlbereich bei einer Startdrehzahl beginnt, die eine Rotordrehzahl bezeichnet, mit der die Windenergieanlage (100) gestartet wird,
- der zweite Rotordrehzahlbereich höhere Drehzahlen (n) aufweist als der erste Rotordrehzahlbereich und
- der dritte Rotordrehzahlbereich höhere Drehzahlen (n) aufweist als der zweite Rotordrehzahlbereich und bis zu einer Nenndrehzahl reicht, und wobei
- der zweite Rotordrehzahlbereich die Resonanzrotordrehzahl umfasst und
- im zweiten Rotordrehzahlbereich die Ausgangsleistung (P) der tonhaltigkeitsreduzierten Betriebskennlinie (202, 204, 302, 304, 306) niedriger ist als die Ausgangsleistung (P) der leistungsoptimalen Betriebskennlinie (200, 300), wobei
- der zweite Rotordrehzahlbereich insbesondere den Resonanzdrehzahlbereich umfasst, oder diesem entspricht.

5. Windenergieanlage (100) nach einem der vorstehenden Ansprüche,
**dadurch gekennzeichnet, dass**
- eine bzw. die Pitchkennlinie (700, 702, 800, 806) in einen ersten, zweiten und dritten Ausgangsleistungsbereich unterteilt werden kann und
- der erste Ausgangsleistungsbereich bei einer Generatorleisung (P) beginnt, die einer Ausgangsleistung (P) entspricht, bei der die Windenergieanlage (100) gestartet wird,
- der zweite Ausgangsleistungsbereich höhere Ausgangsleistungen (P) aufweist als der erste Ausgangsleistungsbereich und
- der dritte Ausgangsleistungsbereich höhere Ausgangsleistungen (P) aufweist als der zweite Ausgangsleistungsbereich und bis zu einer maximalen Ausgangsleistung (P) des Teillastbetriebs oder bis zu einer Nennleistung des Generators (Gen) reicht, und wobei
- bei Auswahl der tonhaltigkeitsreduzierten Betriebskennlinie (202, 306) eine angepasste Pitchkennlinie (702, 806) vorgegeben wird, und
- die angepasste Pitchkennlinie (702, 806) in dem ersten Ausgangsleistungsbereich einen größeren Rotorblattwinkel (α) aufweist, als eine leistungsoptimale Pitchkennlinie (700, 800) in demselben Ausgangsleistungsbereich und/oder
- die angepasste Pitchkennlinie (702, 806) in dem zweiten Ausgangsleistungsbereich einen größeren Rotorblattwinkel (α) aufweist, als eine leistungsoptimale Pitchkennlinie (700, 800) in demselben Ausgangsleistungsbereich, und/oder die angepasste Pitchkennlinie (806) in dem zweiten Ausgangsleistungsbereich einen kleineren Rotorblattwinkel (α) als in dem ersten Ausgangsleistungsbereich aufweist, wobei insbesondere
- wenigstens der zweite Ausgangsleistungsbereich dem zweiten Rotordrehzahlbereich entspricht, und weiterhin insbesondere
- der zweite Ausgangsleistungsbereich einem Windgeschwindigkeitsbereich von etwa 4 bis 10 m/s entspricht und/oder
- der zweite Rotordrehzahlbereich in einem Bereich von etwa 20% bis 80% einer Nenndrehzahl des Rotors (106) liegt.

6. Windenergieanlage (100) nach einem der vorstehenden Ansprüche,
**dadurch gekennzeichnet, dass**
wenigstens in dem zweiten Rotordrehzahlbereich die tonhaltigkeitsreduzierte Betriebskennlinie (202, 204, 302, 304, 306) gegenüber der leistungsoptimalen Betriebskennlinie (200, 300) reduzierte Werte der Ausgangsleistung (P) aufweist und die angepasste Pitchkennlinie (702, 806) in demselben Bereich gegenüber einer leistungsoptimalen Pitchkennlinie (700, 800) geänderte Rotorblattwinkel (α) aufweist, um einer Verschlechterung eines Leistungsbeiwertes, die sich durch eine Veränderung einer Schnelllaufzahl (λ) ergibt, zumindest teilweise entgegen zu wirken, wobei optional die angepasste Pitchkennlinie (702, 806) auch in dem ersten Ausgangsleistungsbereich gegenüber der leistungsoptimalen Pitchkennlinie (700, 800) verändert wird, indem sie dort größere Blattwinkel (α) aufweist, als die leistungsoptimale Pitchkennlinie (700, 800), wobei insbesondere
bei Verwendung der tonhaltigkeitsreduzierten Betriebskennlinie (202, 204, 302, 304, 306) im Bereich von Windgeschwindigkeiten (V_{w}) ab einer Startwindgeschwindigkeit wenigstens bis zu einer halben Nennwindgeschwindigkeit die Schnelllaufzahl (λ) mit steigender Windgeschwindigkeit streng monoton fallend ist, insbesondere mit einer Steigung von weniger als -2, bei einer auf die Nennwindgeschwindigkeit normierten Windgeschwindigkeit, insbesondere von -2 bis -10, vorzugsweise von -2 bis -4.

7. Windenergieanlage (100) nach einem der vorstehenden Ansprüche,
**dadurch gekennzeichnet, dass**
das Verhältnis einer Schnelllaufzahl (λ) bei Verwendung der tonhaltigkeitsreduzierten Betriebskennlinie (202, 204, 302, 304, 306) zu einer Schnelllaufzahl (λ) bei Verwendung einer leistungsoptimalen Betriebskennlinie (200, 300) größer als 1 ist.

8. Verfahren zum Parametrieren einer Windenergieanlage (100) mit einem Turm (102) und einem aerodynamischen Rotor (106), wobei der aerodynamische Rotor (106) mit einer veränderlichen Rotordrehzahl (n) betreibbar ist und mehrere Rotorblätter (108) jeweils mit einem verstellbaren Rotorblattwinkel (α) aufweist, und mit einem Generator (Gen) zum Erzeugen einer elektrischen Ausgangsleistung (P), umfassend die Schritte
- Bestimmen einer leistungsoptimalen Betriebskennlinie (200, 300), die einen Zusammenhang zwischen der Rotordrehzahl (n) und der Ausgangsleistung (P) angibt, wobei die leistungsoptimale Betriebskennlinie (200, 300) so gewählt wird, dass die Windenergieanlage (100) maximale Ausgangsleistung (P) abgibt, solange sie entsprechend dieser Betriebskennlinie (200, 300) betrieben wird,
- Erfassen einer Resonanzdrehzahl, die eine Rotordrehzahl (n) beschreibt, die eine Anlagenresonanz der Windenergieanlage (100) anregt,
- Festlegen eines Resonanzdrehzahlbereichs um die Resonanzdrehzahl (n),
- Bestimmen einer tonhaltigkeitsreduzierten Betriebskennlinie (202, 204, 302, 304, 306), die im Resonanzdrehzahlbereich gegenüber der leistungsoptimalen Betriebskennlinie (200, 300) niedrigere Werte der Ausgangsleistung (P) aufweist, wobei die tonhaltigkeitsreduzierte Betriebskennlinie (202, 204, 302, 304, 306) so bestimmt wird, dass sie auch im Resonanzdrehzahlbereich stetig ist, und
- Anpassen einer Pitchkennlinie (700, 702, 800, 806) in Abhängigkeit der ausgewählten Betriebskennlinie (200, 202, 204, 300, 302, 304, 306), wobei eine Pitchsteuerung vorgesehen ist, die den Rotorblattwinkel (α) entsprechend einer Pitchkennlinie (700, 702, 800, 806) in Abhängigkeit der erzeugten Ausgangsleistung in einem Teillastbetrieb einstellt.

9. Verfahren nach Anspruch 8,
**dadurch gekennzeichnet, dass**
eine Windenergieanlage (100) nach einem der Ansprüche 1 bis 7 parametriert wird und dabei wenigstens Eines festgelegt wird aus der Liste umfassend
- die leistungsoptimale Pitchkennlinie (700, 800),
- den ersten Rotordrehzahlbereich,
- den zweiten Rotordrehzahlbereich,
- den dritten Rotordrehzahlbereich,
- den ersten Ausgangsleistungsbereich,
- den zweiten Ausgangsleistungsbereich,
- den dritten Ausgangsleistungsbereich und
- die schallreduzierte Betriebskennlinie.

10. Verfahren nach Anspruch 8 oder 9,
**dadurch gekennzeichnet, dass**
das Erfassen der Resonanzdrehzahl, so erfolgt, dass die Rotordrehzahl (n) variiert wird und dazu eine Tonhaltigkeit in der Umgebung der Windenergieanlage (100) erfasst wird und als Resonanzdrehzahl die Rotordrehzahl (n) verwendet wird, bei der die Tonhaltigkeit ein Maximum aufweist, insbesondere in einem vorbestimmten Testfrequenzbereich, der in einem Bereich zwischen 10Hz und 100 Hz liegt.

11. Verfahren nach einem der Ansprüche 8 bis 10,
**dadurch gekennzeichnet, dass**
das Bestimmen der tonhaltigkeitsreduzierten Betriebskennlinie (202, 204, 302, 304, 306) so erfolgt, dass die Ausgangsleistung (P) im Resonanzdrehzahlbereich, insbesondere bei der Resonanzdrehzahl, gegenüber der leistungsoptimalen Betriebskennlinie (200, 300) so weit reduziert wird, dass eine bzw. die in der Umgebung der Windenergieanlage (100) aufgenommene Tonhaltigkeit einen vorbestimmten Grenzwert unterschreitet, insbesondere, dass das Reduzieren der Ausgangsleistung (P) und Aufnehmen der Tonhaltigkeit so lange wiederholt wird, bis der vorbestimmte Grenzwert unterschritten wird.

12. Verfahren zum Betreiben einer Windenergieanlage (100) mit einem Turm (102) und einem aerodynamischen Rotor (106), wobei der aerodynamische Rotor (106) mit einer veränderlichen Rotordrehzahl (n) betreibbar ist und mehrere Rotorblätter (108) jeweils mit einem verstellbaren Rotorblattwinkel (α) aufweist, und mit einem Generator (Gen) zum Erzeugen einer elektrischen Ausgangsleistung (P), wobei
- zum Betreiben der Windenergieanlage (100) eine Betriebskennlinie (200, 202, 204, 300, 302, 304, 306) vorgegeben wird, die einen Zusammenhang zwischen der Rotordrehzahl (n) und der Ausgangsleistung (P) angibt und
- die Ausgangsleistung (P) entsprechend der Betriebskennlinie (200, 202, 204, 300, 302, 304, 306) in Abhängigkeit der Rotordrehzahl eingestellt wird, wobei
- als Betriebskennlinie (200, 202, 204, 300, 302, 304, 306) eine tonhaltigkeitsreduzierte Betriebskennlinie (202, 204, 302, 304, 306) auswählbar ist, die so ausgelegt ist, dass eine Anregung einer Anlagenresonanz der Windenergieanlage (100) gegenüber einer leistungsoptimalen Betriebskennlinie (200, 300) reduziert ist, ohne eine diese Anlagenresonanz anregende Drehzahl (n) auszusparen und wobei
- abhängig von der ausgewählten Betriebskennlinie (200, 202, 204, 300, 302, 304, 306) eine Pitchkennlinie (700, 702, 800, 806) angepasst wird, wobei eine Pitchsteuerung den Rotorblattwinkel (α) entsprechend einer Pitchkennlinie (700, 702, 800, 806) in Abhängigkeit der erzeugten Ausgangsleistung in einem Teillastbetrieb einstellt.

13. Verfahren nach Anspruch 12,
**dadurch gekennzeichnet, dass**
die Windenergieanlage (100) durch ein Verfahren gemäß einem der Ansprüche 8 bis 12 parametriert wurde und/oder dass eine Windenergieanlage (100) gemäß einem der Ansprüche 1 bis 11 verwendet wird.

14. Verfahren nach Anspruch 12 oder 13,
**dadurch gekennzeichnet, dass**
in Abhängigkeit einer externen Vorgabe oder einer Tageszeit umgeschaltet wird zwischen
- einem Betrieb der Windenergieanlage (100) mit der tonhaltigkeitsreduzierten Betriebskennlinie (202, 204, 302, 304, 306),
- einem Betrieb der Windenergieanlage (100) mit der leistungsoptimalen Betriebskennlinie (200, 300), die so ausgelegt ist, dass eine Leistungsentnahme aus dem Wind maximiert wird, und
- einem Betrieb der Windenergieanlage (100) mit einer schallreduzierten Betriebskennlinie, die so ausgelegt ist, dass Schallemissionen der Windenergieanlage (100), besonders ein Schallleistungsspektrum der Schallemissionen, gegenüber der leistungsoptimalen Betriebskennlinie (200, 300) reduziert werden.

15. Windenergieanlage (100) nach einem der Ansprüche 1 bis 7,
**dadurch gekennzeichnet, dass**
sie durch ein Verfahren gemäß einem der Ansprüche 8 bis 11 parametriert wurde und/oder durch ein Verfahren nach einem der Ansprüche 12 bis 14 betrieben wird.

## Claims

1. A wind power installation (100) with
- a tower (102),
- an aerodynamic rotor (106), wherein the aerodynamic rotor (106)
- can be operated with a variable rotor speed (n) and
- has a number of rotor blades (108) respectively with an adjustable rotor blade angle (α),
- a generator (Gen) for generating an electrical output power,
wherein
- for operating the wind power installation (100) an operating characteristic (200, 202, 204, 300, 302, 304, 306), which indicates a relationship between the rotor speed (n) and the output power (P), is specified and
- a controller, which sets the output power (P) in a way corresponding to the operating characteristic (200, 202, 204, 300, 302, 304, 306) in dependence on the rotor speed (n), is provided, wherein
- selectable as the operating characteristic (200, 202, 204, 300, 302, 304, 306) is a reduced-tonality operating characteristic (202, 204, 302, 304, 306), which is designed such that an excitation of a system resonance of the wind power installation (100) is reduced as compared with an optimum-power operating characteristic (200, 300), without however excluding a speed (2) that excites this system resonance and **characterized in that**
- it is provided with a pitch control, which sets the rotor blade angle (α) in dependence on the generated output power in partial-load operation in a way corresponding to a pitch characteristic (700, 702, 800, 806), and wherein the pitch characteristic (700, 702, 800, 806) is adapted in dependence on the selected operating characteristic (200, 202, 204, 300, 302, 304, 306), in particular is selectable from a number of pitch characteristics (700, 702, 800, 806), in particular a dedicated pitch characteristic is provided for each operating characteristic.

2. The wind power installation (100) as claimed in claim 1,
**characterized in that**
the operating characteristic (200, 202, 204, 300, 302, 304, 306) is at least selectable from
- the reduced-tonality operating characteristic (202, 204, 302, 304, 306),
- the optimum-power characteristic (200, 300), which is designed such that taking power from the wind is maximized, and
- the reduced-sound operating characteristic, which is designed such that sound emissions of the wind power installation (100), particularly a sound power range of the power emissions, is/are reduced as compared with the optimum-power operating characteristic (200, 300).

3. The wind power installation (100) as claimed in claim 1 or 2,
**characterized in that**
- the reduced-tonality operating characteristic (202, 204, 302, 304, 306) has lower values of the output power (P) in a resonance speed range of a rotor speed (n) exciting a system resonance of the wind power installation (100) than the optimum-power operating characteristic (200, 300) in the same resonance speed range,
and wherein the reduced-tonality operating characteristic (202, 204, 302, 304, 306) is also steady in the resonance speed range, wherein in particular even in the resonance speed range, the reduced-tonality operating characteristic (202, 204, 302, 304, 306) is continuously differentiable and strictly monotonously rising.

4. The wind power installation (100) as claimed in one of the preceding claims, **characterized in that**
- the reduced-tonality operating characteristic (202, 204, 302, 304, 306) can be divided into a first, second and third rotor speed range and
- the first rotor speed range begins at a starting speed, which denotes a rotor speed with which the wind power installation (100) is started,
- the second rotor speed range has higher rotational speeds (n) than the first rotor speed range and
- the third rotor speed range has higher rotational speeds (n) than the second rotor speed range and extends up to a rated speed, and wherein
- the second rotor speed range comprises the resonance rotor speed and
- in the second rotor speed range the output power (P) of the reduced-tonality operating characteristic (202, 204, 302, 304, 306) is lower than the output power (P) of the optimum-power operating characteristic (200, 300), wherein
- the second rotor speed range in particular comprises the resonance speed range, or corresponds to it.

5. The wind power installation (100) as claimed in one of the preceding claims, **characterized in that**
- a or the pitch characteristic (700, 702, 800, 806) can be divided into a first, second and third output power range and
- the first output power range begins at a generator power (P) which corresponds to an output power (P) with which the wind power installation (100) is started,
- the second output power range has higher output powers (P) than the first output power range and
- the third output power range has higher output powers (P) than the second output power range and extends up to a maximum output power (P) of partial-load operation or up to a rated power of the generator (Gen), and wherein
- when selecting the reduced-tonality operating characteristic (202, 306), an adapted pitch characteristic (702, 806) is specified, and
- the adapted pitch characteristic (702, 806) has a greater rotor blade angle (α) in the first output power range than an optimum-power pitch characteristic (700, 800) in the same output power range and/or
- the adapted pitch characteristic (702, 806) has a greater rotor blade angle (α) in the second output power range than an optimum-power pitch characteristic (700, 800) in the same output power range, and/or the adapted pitch characteristic (806) has a smaller rotor blade angle (α) in the second output power range than in the first output power range, wherein in particular
- at least the second output power range corresponds to the second rotor speed range, and further in in particular
- the second output power range corresponds to a wind speed range of approximately 4 to 10 m/s and/or
- the second rotor speed range lies in the range of approximately 20% to 80% of the rated speed of the rotor (106).

6. The wind power installation (100) as claimed in one of the preceding claims,
**characterized in that**
at least in the second rotor speed range, the reduced-tonality operating characteristic (202, 204, 302, 304, 306) has reduced values of the output power (P) as compared with the optimum-power operating characteristic (200, 300) and the adapted pitch characteristic (702, 806) has in the same range changed rotor blade angles (α) as compared with an optimum-power pitch characteristic (700, 800), in order to at least partially counteract a worsening of a power coefficient that occurs due to changing a tip speed ratio (λ), wherein optionally the adapted pitch characteristic (702, 806) is also changed as compared with the optimum-power pitch characteristic (700, 800) in the first output power range, **in that** it has greater rotor blade angles (α) there than the optimum-power pitch characteristic (700, 800), wherein in particular
when using the reduced-tonality operating characteristic (202, 204, 302, 304, 306) in the range of wind speeds (V_{w}) from a starting wind speed at least up to half the rated wind speed, the tip speed ratio (λ) is strictly monotonously descending with increasing wind speed, in particular with a slope of less than -2, in the case of a wind speed normalized to the rated wind speed, in particular of -2 to -10, preferably of -2 to -4.

7. The wind power installation (100) as claimed in one of the preceding claims,
**characterized in that**
the ratio of a tip speed ratio (λ) when using the reduced-tonality operating characteristic (202, 204, 302, 304, 306) to a tip speed ratio (λ) when using an optimum-power operating characteristic (200, 300) is greater than 1.

8. A method for parameterizing a wind power installation (100) with a tower (102) and an aerodynamic rotor (106), wherein the aerodynamic rotor (106) can be operated with a variable rotor speed (n) and has a number of rotor blades (108) respectively with an adjustable rotor blade angle (α), and with a generator (Gen) for generating an electrical output power (P),
comprising the steps of
- determining an optimum-power operating characteristic (200, 300), which indicates a relationship between the rotor speed (n) and the output power (P), wherein the optimum-power operating characteristic (200, 300) is chosen such that the wind power installation (100) delivers maximum output power (P) as long as it is operated in a way corresponding to this operating characteristic (200, 300),
- recording a resonance speed, which describes a rotor speed (n) that excites a system resonance of the wind power installation (100),
- establishing a resonance speed range around the resonance speed (n),
- determining a reduced-tonality operating characteristic (202, 204, 302, 304, 306) that has lower values of the output power (P) in the resonance speed range as compared with the optimum-power operating characteristic (200, 300), wherein the reduced-tonality operating characteristic (202, 204, 302, 304, 306) is also steady in the resonance speed range and
- adapting a pitch characteristic (700, 702, 800, 802) in dependence on the selected operating characteristic (200, 202, 204, 300, 302, 304, 306), wherein a pitch control is provided which sets the rotor blade angle (α) in accordance with a pitch characteristic (700, 702, 800, 806) in dependence on the generated output power in a partial-load operation.

9. The method as claimed in claim 8,
**characterized in that**
a wind power installation (100) as claimed in one of claims 1 to 7 is parameterized, thereby establishing at least one from the list comprising
- the optimum-power pitch characteristic (700, 800),
- the first rotor speed range,
- the second rotor speed range,
- the third rotor speed range,
- the first output power range,
- the second output power range,
- the third output power range and
- the reduced-sound operating characteristic.

10. The method as claimed in claim 8 or 9,
**characterized in that**
the recording of the resonance speed takes place by varying the rotor speed (n) and recording a related tonality in the vicinity of the wind power installation (100) and the rotor speed (n) at which the tonality has a maximum is used as the resonance speed, in particular in a predetermined test frequency range, which lies in a range between 10 Hz and 100 Hz.

11. The method as claimed in one of claims 8 to 10,
**characterized in that**
the reduced-tonality operating characteristic (202, 204, 302, 304, 306) is determined such that the output power (P) in the resonance speed range, in particular at the resonance speed, is reduced as compared with the optimum-power operating characteristic (200, 300) to the extent that a or the tonality recorded in the vicinity of the wind power installation (100) goes below a predetermined limit value, in particular **in that** the process of reducing the output power (P) and recording the tonality is repeated until it goes below the predetermined limit value.

12. A method for operating a wind power installation (100) with a tower (102) and an aerodynamic rotor (106), wherein the aerodynamic rotor (106) can be operated with a variable rotor speed (n) and has a number of rotor blades (108) respectively with an adjustable rotor blade angle (α), and with a generator (Gen) for generating an electrical output power (P), wherein
- an operating characteristic (200, 202, 204, 300, 302, 304, 306), which indicates a relationship between the rotor speed (n) and the output power (P), is specified for operating the wind power installation (100), and
- the output power (P) is set in dependence on the rotor speed in a way corresponding to the operating characteristic (200, 202, 204, 300, 302, 304, 306), wherein
- selectable as the operating characteristic (200, 202, 204, 300, 302, 304, 306) is a reduced-tonality operating characteristic (202, 204, 302, 304, 306), which is designed such that an excitation of a system resonance of the wind power installation (100) is reduced as compared with an optimum-power operating characteristic (200, 300), without however excluding a speed (n) that excites this system resonance and wherein
- depending on the selected operating characteristic (200, 202, 204, 300, 302, 304, 306), a pitch characteristic (700, 702, 800, 806) is adapted, wherein a pitch control sets the rotor blade angle (α) according to a pitch characteristic (700, 702, 800, 806) in dependence on the generated output power in a partial-load operation.

13. The method as claimed in claim 12,
**characterized in that**
the wind power installation (100) has been parameterized by a method as claimed in one of claims 8 to 12 and/or **in that** a wind power installation (100) as claimed in one of claims 1 to 11 is used.

14. The method as claimed in claim 12 or 13,
**characterized in that**
in dependence on an external specification or a time of day, switching takes place between,
- operation of the wind power installation (100) with the reduced-tonality operating characteristic (202, 204, 302, 304, 306),
- operation of the wind power installation (100) with the optimum-power operating characteristic (200, 300), which is designed such that taking power from the wind is maximized, and
- operation of the wind power installation (100) with a reduced-sound operating characteristic, which is designed such that sound emissions of the wind power installation (100), particularly a sound power range of the sound emissions, is/are reduced as compared with the optimum-power operating characteristic (200, 300).

15. The wind power installation (100) as claimed in one of claims 1 to 7,
**characterized in that**
it has been parameterized by a method as claimed in one of claims 8 to 11 and/or is operated by a method as claimed in one of claims 12 to 14.

## Revendications

1. Eolienne (100) avec
- une tour (102),
- un rotor aérodynamique (106), dans laquelle le rotor aérodynamique (106)
- peut fonctionner avec une vitesse de rotation de rotor (n) variable et
- présente plusieurs pales de rotor (108) respectivement avec un angle de pale de rotor (a) ajustable,
- un générateur (Gen) pour produire une puissance de sortie électrique
dans laquelle
- est spécifiée pour faire fonctionner l'éolienne (100) une caractéristique de fonctionnement (200, 202, 204, 300, 302, 304, 306), qui indique un lien entre la vitesse de rotation de rotor (n) et la puissance de sortie (P), et
- est prévue une commande, qui règle la puissance de sortie (P) conformément à la caractéristique de fonctionnement (200, 202, 204, 300, 302, 304, 306) en fonction de la vitesse de rotation de rotor (n), dans laquelle
- peut être choisie en tant que caractéristique de fonctionnement (200, 202, 204, 300, 302, 304, 306) une caractéristique de fonctionnement à tonalité à composantes discrètes réduite (202, 204, 302, 304, 306), qui est conçue de telle sorte qu'une excitation d'une résonance d'installation de l'éolienne (100) est réduite par rapport à une caractéristique de fonctionnement à puissance optimale (200, 300) sans négliger une vitesse de rotation (2) excitant ladite résonance d'installation, **caractérisée en ce que**
- est prévu un système de régulation de pas, qui règle l'angle de pale de rotor (α) conformément à une caractéristique de pas (700, 702, 800, 806) en fonction de la puissance de sortie produite dans un fonctionnement en charge partielle, et dans laquelle la caractéristique de pas (700, 702, 800, 806) est adaptée en fonction de la caractéristique de fonctionnement (200, 202, 204, 300, 302, 304, 306) choisie,
en particulier peut être choisie parmi plusieurs caractéristiques de pas (700, 702, 800, 806), en particulier une caractéristique de pas propre est prévue pour chaque caractéristique de fonctionnement.

2. Eolienne (100) selon la revendication 1, **caractérisée en ce que**
la caractéristique de fonctionnement (200, 202, 204, 300, 302, 304, 306) peut être choisie au moins parmi
- la caractéristique de fonctionnement à tonalité à composantes discrètes réduite (202, 204, 302, 304, 306),
- la caractéristique de fonctionnement à puissance optimale (200, 300), qui est conçue de telle sorte qu'un prélèvement de puissance du vent est maximisé, et
- une caractéristique de fonctionnement à bruit réduit qui est conçue de telle sorte que des émissions de bruit de l'éolienne (100), en particulier un spectre de puissance de bruit des émissions de bruit, sont réduites par rapport à la caractéristique de fonctionnement à puissance optimale (200, 300).

3. Eolienne (100) selon la revendication 1 ou 2, **caractérisée en ce que**
- la caractéristique de fonctionnement à tonalité à composantes discrètes réduite (202, 204, 302, 304, 306) présente dans une plage de vitesses de rotation de résonance d'une vitesse de rotation de rotor (n) excitant une résonance d'installation de l'éolienne (100) des valeurs de la puissance de sortie (P) inférieures à la caractéristique de fonctionnement à puissance optimale (200, 300) dans la même plage de vitesses de rotation de résonance,
et dans laquelle la caractéristique de fonctionnement à tonalité à composantes discrètes réduite (202, 204, 302, 304, 306) est constante également dans la plage de vitesses de rotation de résonance, dans laquelle en particulier la caractéristique de fonctionnement à tonalité à composantes discrètes réduite (202, 204, 302, 304, 306) peut être différenciée en permanence et augmente de manière fortement monotone également dans la plage de vitesses de rotation de résonance.

4. Eolienne (100) selon l'une quelconque des revendications précédentes,
**caractérisée en ce que**
- la caractéristique de fonctionnement à tonalité à composantes discrètes réduite (202, 204, 302, 304, 306) peut être divisée en une première, deuxième et troisième plage de vitesses de rotation de rotor, et
- la première plage de vitesses de rotation de rotor débute à une vitesse de rotation de démarrage qui désigne une vitesse de rotation avec laquelle l'éolienne (100) est démarrée,
- la deuxième plage de vitesses de rotation présente des vitesses de rotation (n) plus élevées que la première plage de vitesses de rotation de rotor, et
- la troisième plage de vitesses de rotation de rotor présente des vitesses de rotation (n) plus élevées que la deuxième plage de vitesses de rotation de rotor et va jusqu'à une vitesse de rotation nominale, et dans laquelle
- la deuxième plage de vitesses de rotation de rotor comprend la vitesse de rotation de rotor de résonance, et
- la puissance de sortie (P) de la caractéristique de fonctionnement à tonalité de composantes discrètes réduite (202, 204, 302, 304, 306) est dans la deuxième plage de vitesses de rotation de rotor inférieure à la puissance de sortie (P) de la caractéristique de fonctionnement à puissance optimale (200, 300), dans laquelle
- la deuxième plage de vitesses de rotation de rotor comprend en particulier la plage de vitesses de rotation de résonance ou correspond à celle-ci.

5. Eolienne (100) selon l'une quelconque des revendications précédentes,
**caractérisée en ce que**
- une ou la caractéristique de pas (700, 702, 800, 806) peut être divisée en une première, deuxième et troisième plage de puissances de sortie, et
- la première plage de puissances de sortie débute à une puissance de générateur (P) qui correspond à une puissance de sortie (P), à laquelle l'éolienne (100) est démarrée,
- la deuxième plage de puissances de sortie présente des puissances de sortie (P) plus élevées que la première plage de puissances de sortie, et
- la troisième plage de puissances de sortie présente des puissances de sortie (P) plus élevées que la deuxième plage de puissances de sortie et va jusqu'à une puissance de sortie (P) maximale du fonctionnement en charge partielle ou jusqu'à une puissance nominale du générateur (Gen), et dans laquelle
- une caractéristique de pas (702, 806) adaptée est spécifiée lors du choix de la caractéristique de fonctionnement à tonalité à composantes discrètes réduite (202, 306), et
- la caractéristique de pas (702, 806) adaptée présente dans la première plage de puissances de sortie un angle de pale de rotor (α) plus grand qu'une caractéristique de pas à puissance optimale (700, 800) dans la même plage de puissances de sortie, et/ou
- la caractéristique de pas (702, 806) adaptée présente dans la deuxième plage de puissances de sortie un angle de pale de rotor (α) plus grand qu'une caractéristique de pas à puissance optimale (700, 800) dans la même plage de puissances de sortie, et/ou la caractéristique de pas (806) adaptée présente dans la deuxième plage de puissances de sortie un angle de pale de rotor (α) plus petit que dans la première plage de puissances de sortie, dans laquelle en particulier
- au moins la deuxième plage de puissances de sortie correspond à la deuxième plage de vitesses de rotation de rotor, et par ailleurs en particulier
- la deuxième plage de puissances de sortie correspond à une plage de vitesses du vent d'à peu près 4 à 10 m/s, et/ou
- la deuxième plage de vitesses de rotation de rotor se situe dans une plage d'environ 20 % à 80 % d'une vitesse de rotation nominale du rotor (106).

6. Eolienne (100) selon l'une quelconque des revendications précédentes,
**caractérisée en ce que**
au moins dans la deuxième plage de vitesses de rotation de rotor, la caractéristique de fonctionnement à tonalité à composantes discrètes réduite (202, 204, 302, 304, 306) présente par rapport à la caractéristique de fonctionnement à puissance optimale (200, 300) des valeurs réduites de la puissance de sortie (P), et la caractéristique de pas (702, 806) adaptée présente dans la même plage par rapport à une caractéristique de pas à puissance optimale (700, 800) des angles de pale de rotor (α) modifiés pour contrecarrer au moins en partie une dégradation d'un coefficient de puissance, qui résulte du fait d'une modification d'une vitesse de rotation en bout de pale (λ), dans laquelle en option la caractéristique de pas (702, 806) adaptée est modifiée également dans la première plage de puissances de sortie par rapport à la caractéristique de pas à puissance optimale (700, 800) **en ce qu'**elle y présente des angles de pale (α) plus grands que la caractéristique de pas à puissance optimale (700, 800), dans laquelle en particulier
lors de l'utilisation de la caractéristique de fonctionnement à tonalité à composantes discrètes réduite (202, 204, 302, 304, 306) dans la plage de vitesses du vent (Vw) à partir d'une vitesse de vent de démarrage au moins jusqu'à une demi-vitesse nominale du vent, la vitesse de rotation en bout de pale (λ) baisse de manière fortement monotone avec une vitesse du vent qui augmente, en particulier avec une augmentation inférieure à -2, à une vitesse du vent normalisée sur la vitesse nominale du vent, en particulier de -2 à -10, de préférence de -2 à -4.

7. Eolienne (100) selon l'une quelconque des revendications précédentes,
**caractérisée en ce que**
le rapport entre une vitesse de rotation en bout de pale (À) lors de l'utilisation de la caractéristique de fonctionnement à tonalité à composantes discrètes réduite (202, 204, 302, 304, 306) et une vitesse de rotation en bout de pale (λ) lors de l'utilisation d'une caractéristique de fonctionnement à puissance optimale (200, 300) est supérieur à 1.

8. Procédé pour paramétrer une éolienne (100) avec une tour (102) et un rotor aérodynamique (106), dans lequel le rotor aérodynamique (106) peut fonctionner avec une vitesse de rotation de rotor (n) variable et présente plusieurs pales de rotor (108) respectivement avec un angle de pale de rotor (α) ajustable, et avec un générateur (Gen) pour produire une puissance de sortie (P) électrique, comprenant les étapes
- de définition d'une caractéristique de fonctionnement à puissance optimale (200, 300), qui indique un lien entre la vitesse de rotation de rotor (n) et la puissance de sortie (P), dans lequel la caractéristique de fonctionnement à puissance optimale (200, 300) est choisie de telle sorte que l'éolienne (100) émet une puissance de sortie (P) maximale tant qu'elle fonctionne conformément à ladite caractéristique de fonctionnement (200, 300),
- de détection d'une vitesse de rotation de résonance, qui décrit une vitesse de rotation de rotor (n) qui excite une résonance d'installation de l'éolienne (100),
- de fixation d'une plage de vitesses de rotation de résonance autour de la vitesse de rotation de résonance (n),
- de définition d'une caractéristique de fonctionnement à tonalité à composantes discrètes réduites (202, 204, 302, 304, 306), qui présente dans la plage de vitesses de rotation de résonance par rapport à la caractéristique de fonctionnement à puissance optimale (200, 300) des valeurs inférieures de la puissance de sortie (P), dans lequel la caractéristique de fonctionnement à tonalité à composantes discrètes réduite (202, 204, 302, 304, 306) est définie de telle sorte qu'elle est constante également dans la plage de vitesses de rotation de résonance, et
- d'adaptation d'une caractéristique de pas (700, 702, 800, 806) en fonction de la caractéristique de fonctionnement (200, 202, 204, 300, 302, 304, 306) choisie, dans lequel un système de régulation de pas est prévu, qui règle l'angle de pale de rotor (α) conformément à une caractéristique de pas (700, 702, 800, 806) en fonction de la puissance de sortie produite dans un fonctionnement à charge partielle.

9. Procédé selon la revendication 8,
**caractérisé en ce que**
une éolienne (100) selon l'une quelconque des revendications 1 à 7 est paramétrée et est déterminée d'après au moins un élément issu de la liste comprenant
- la caractéristique de pas à puissance optimale (700, 800),
- la première plage de vitesses de rotation de rotor,
- la deuxième plage de vitesses de rotation de rotor,
- la troisième plage de vitesses de rotation de rotor,
- la première plage de puissances de sortie,
- la deuxième plage de puissances de sortie,
- la troisième plage de puissances de sortie, et
- la caractéristique de fonctionnement à bruit réduit.

10. Procédé selon la revendication 8 ou 9, **caractérisé en ce que**
la détection de la vitesse de rotation de résonance est effectuée de telle sorte que la vitesse de rotation de rotor (n) varie et une tonalité à composantes discrètes est à cet effet détectée dans l'environnement de l'éolienne (100) et la vitesse de rotation de rotor (n) est utilisée en tant que vitesse de rotation de résonance, à laquelle la tonalité à composantes discrètes présente un maximum, en particulier dans une plage de fréquences de test prédéfinie, qui se situe dans une plage entre 10 Hz et 100 Hz.

11. Procédé selon l'une quelconque des revendications 8 à 10,
**caractérisé en ce que**
la définition de la caractéristique de fonctionnement à tonalité à composantes discrètes réduite (202, 204, 302, 304, 306) est effectuée de telle sorte que la puissance de sortie (P) est réduite dans la plage de vitesses de rotation de résonance, en particulier à la vitesse de rotation de résonance, par rapport à la caractéristique de fonctionnement à puissance optimale (200, 300) au point qu'une ou la tonalité à composantes discrètes enregistrée dans l'environnement de l'éolienne (100) ne dépasse pas une valeur limite prédéfinie, en particulier que la réduction de la puissance de sortie (P) et l'enregistrement de la tonalité à composantes discrètes sont répétées jusqu'à ce que la valeur limite prédéfinie ne soit pas dépassée.

12. Procédé pour faire fonctionner une éolienne (100) avec une tour (102) et un rotor aérodynamique (106), dans lequel le rotor aérodynamique (106) peut fonctionner à une vitesse de rotation de rotor (n) variable et présente plusieurs pales de rotor (108) respectivement avec un angle de pale de rotor (a) ajustable, et avec un générateur (Gen) pour produire une puissance de sortie (P) électrique, dans lequel
- pour faire fonctionner l'éolienne (100), une caractéristique de fonctionnement (200, 202, 204, 300, 302, 304, 306) est spécifiée, qui indique un lien entre la vitesse de rotation de rotor (n) et la puissance de sortie (P) et
- la puissance de sortie (P) est réglée conformément à la caractéristique de fonctionnement (200, 202, 204, 300, 302, 304, 306) en fonction de la vitesse de rotation de rotor,
dans lequel
- peut être choisie en tant que caractéristique de fonctionnement (200, 202, 304, 300, 302, 304, 306) une caractéristique de fonctionnement à tonalité à composantes discrètes réduite (202, 204, 302, 304, 306), qui est conçue de telle sorte qu'une excitation d'une résonance d'installation de l'éolienne (100) est réduite par rapport à une caractéristique de fonctionnement à puissance optimale (200, 300) sans négliger une vitesse de rotation (n) excitant ladite résonance d'installation, et dans lequel
- une caractéristique de pas (700, 702, 800, 806) est adaptée en fonction de la caractéristique de fonctionnement (200, 202, 204, 300, 302, 304, 306) choisie, dans lequel un système de régulation de pas règle l'angle de pale de rotor (α) conformément à une caractéristique de pas (700, 702, 800, 806) en fonction de la puissance de sortie produite dans un fonctionnement à charge partielle.

13. Procédé selon la revendication 12,
**caractérisé en ce que**
l'éolienne (100) a été paramétrée par un procédé selon l'une quelconque des revendications 8 à 12, et/ou qu'une éolienne (100) selon l'une quelconque des revendications 1 à 11 est utilisée.

14. Procédé selon la revendication 12 ou 13,
**caractérisé en ce que**
est effectuée en fonction d'une spécification externe ou d'une heure une commutation entre
- un fonctionnement de l'éolienne (100) avec la caractéristique de fonctionnement à tonalité à composantes discrètes réduite (202, 204, 302, 304, 306),
- un fonctionnement de l'éolienne (100) avec la caractéristique de fonctionnement à puissance optimale (200, 300) qui est conçue de telle sorte qu'un prélèvement de puissance du vent est maximisé, et
- un fonctionnement de l'éolienne (100) avec une caractéristique de fonctionnement à bruit réduit qui est conçue de telle sorte que des émissions de bruit de l'éolienne (100), en particulier un spectre de puissance de bruit des émissions de bruit, sont réduites par rapport à la caractéristique de fonctionnement à puissance optimale (200, 300).

15. Eolienne (100) selon l'une quelconque des revendications 1 à 7,
**caractérisée en ce que**
elle a été paramétrée par un procédé selon l'une quelconque des revendications 8 à 11 et/ou elle fonctionne grâce un procédé selon l'une quelconque des revendications 12 à 14.
